# EUROPEAN PATENT SPECIFICATION

(11) **EP 0 712 545 B1**
(45) Date of publication and mention of the grant of the patent: **14.08.2002**
(21) Application number: 94919386.6
(22) Date of filing: 08.06.1994
(51) Int. Cl.: H02K 11/00, H02K 7/20, H02K 47/04, H02K 16/00, H02P 1/32, H02K 7/02, H02K 47/20, H02J 9/06

(54) **VERSATILE AC DYNAMO-ELECTRIC MACHINE**
VIELSEITIGE DYNAMOELEKTRISCHE MASCHINE DER WECHSELSTROM-BAUART
MOTOALTERNATEUR A PLUSIEURS FONCTIONS

(43) Date of publication of application: 22.05.1996
(73) Proprietor: PRECISE POWER CORPORATION, Bradenton, FL 34208 (US)
(72) Inventor: ROESEL, John, F. Jr., Bradenton, FL 34202 (US); BARBER, Ronnie, J., Bradenton, FL 34207 (US)
(74) Representative: Jehan, Robert
(86) International application number: US9406364
(87) International publication number: WO9534117

(56) References cited:
- EP-A- 0 421 655
- CH-A- 607 426
- GB-A- 994 108
- US-A- 2 113 102
- US-A- 3 050 635
- US-A- 4 447 737
- US-A- 4 663 536
- US-A- 4 827 152
- US-A- 5 068 587
- US-A- 5 254 894
- US-A- 5 281 879
- US-A- 5 311 062

## Description

### BACKGROUND

### NEED FOR UNINTERRUPTIBLE POWER SUPPLY (UPS)

Scientific, commercial, medical, governmental, military, communications and industrial activities, as well as offices, businesses, schools and homes, need electrical power to carry out many of their functions. A sudden interruption or failure, even of brief duration, of electrical power is not only inconvenient, but may be damaging and costly to any of these activities. Computer data may be lost, work in progress damaged, or lives may be put in jeopardy. Sometimes it takes many days of time and work effort to restore manufacturing operations and to recover from the damage and losses so incurred from electrical power failures.

Many of these facilities and activities have gas or diesel engine generators or other standby electrical power equipment that require several seconds to activate and put into service to replace the suddenly unavailable electrical power. The several second lapse of time while an engine is being started and when no electrical power is available can cause serious disruption or even damage or loss to such facilities.

### RELIABILITY OF ELECTRICAL POWER SUPPLY

While utilities supplying electrical power are usually quite reliable, circumstances beyond their control may occur from time to time that interrupt or cause the electrical power supply to be inadequate or unusable. Accidents and equipment failure in the power plants, or lightning strikes and other incidents affecting the power lines, transformers and other equipment, may cut off electrical power in areas ranging in extent from whole cities, down to only a single power line into a factory, home or an office. As a result, the electrical power user often is suddenly, and usually unexpectedly, rendered helpless.

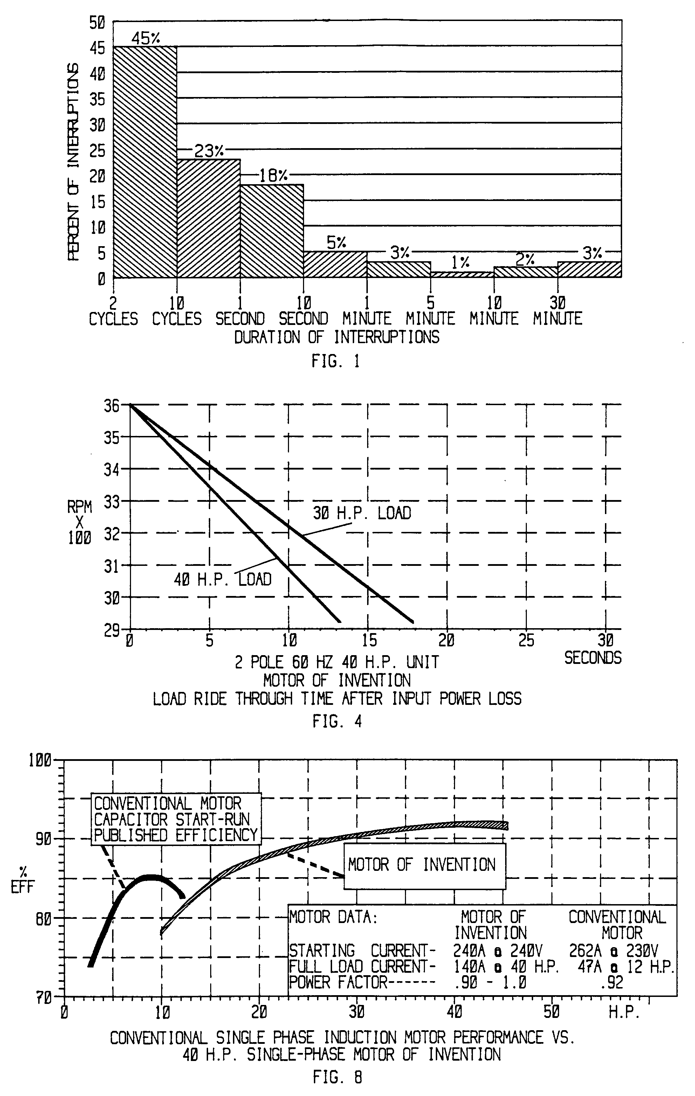

Electric utilities inform their customers that they cannot guarantee clean uninterrupted electrical power being delivered at all times to a customer. Studies of the types of electrical interruptions and disturbances in a number of U.S. and Canadian utilities show that, during a long period of time such as a year, the frequency and duration of various kinds of interruptions averages out to a general pattern as shown in Figure 1 of the drawings. It will be noted from the bar chart in Figure 1 that about 45% of the interruptions in these 60 Hertz systems last less than 10 cycles, that is less than a sixth of a second, which period is far more time than that required to "crash" a computer. Another 23% of the interruptions last less than a second, while 18% of the interruptions last from 1 to 10 seconds. Thus, a total of some 86% of the AC power interruptions do not last beyond 10 seconds. However, the final 14% of the power interruptions that last more than 10 seconds also create major problems for many electrical power users and may result in the most costly damage. In addition, on any local power line, power factor correction capacitors and other switching on the utility system, together with customer motor starting, load switching and electrically "dirty loads", such as arc melting furnaces, electronic motor drives, battery chargers and the like, create an almost constant chorus of voltage spikes, sags and electrical noise on the power lines which may result in problems for many users. Another source of problems occur during weather extremes in some areas, such as either a very cold snap in the southeast U.S. or a heat wave in summer in the mid-west, when so much electrical power demand is created that the utility peak power generating capacity can be exceeded. When this happens, the utility may have to resort to "rolling" blackouts lasting 15 minutes or so in duration by interrupting all electrical power to successive portions of their utility service area in order to prevent total system collapse. These "blackouts" may be repeated every 2-3 hours in each section of the utility's service areas until the crisis is over.

To avoid some of these electric power quality problems, reliance is placed by the electrical user on auxiliary power protection devices and/or power supplies which are interposed between the utility line and the electrical equipment to keep it functioning when the outside electrical power supply is unacceptable or is interrupted. In many cases these auxiliary power supplies utilize electronic semiconductors in the power path to convert and control the auxiliary electrical power. These last components are sometimes subject to failure from high voltage spikes in the incoming AC power lines, and the resulting failure may also cause damage to the load being protected. In many UPS units, storage batteries are relied upon to supply electrical power to equipment when the outside AC power is interrupted. These battery systems are often rated for a 5 to 15 minute operation with a several hour subsequent battery recharge often being needed before they are available when another outside power outage occurs. This last need renders this type of system almost useless in any "rolling" blackout or a long term outage situation. Further, the proper installation of storage batteries usually requires that a separate room be used to provide isolated ventilation to prevent the accumulation of acid fumes and hydrogen gases. Serious fires and explosions have occurred when a failure in a battery (often due to poor maintenance or installation) takes place in a group of lead-acid batteries. In a recent situation, in a major city in the United States, a spontaneous explosion took place in a room having a large stack of lead-acid batteries used to power city wide communications and related services. In this case, the entire safety system of the city failed to function for over seven hours and in that period there were no normally available fire, police or medical emergency communications. It also took much effort and expense to clean up the acid spill. Further, storage batteries require regular maintenance and recharging. Depending on the design and usage, the life of a lead-acid battery system may be relatively short so that they may require replacement every few years. Storage batteries are quite temperature sensitive and deteriorate rapidly if their temperature rises above about 25°C (77°F). In addition, the disposal of storage batteries constitutes a serious ecology problem. Diesel engines and other engines connected to drive auxiliary electrical generators are often used as standby emergency units when outside utility power is interrupted, and they ordinarily require a storage battery to start the engines. Thus, they are critically dependent on a battery to function when so needed. Failure of the cranking battery is one of the main reasons for failure to start in these engine-generator sets. Consequently the batteries require regular care and maintenance at all times. Battery chargers are a major source of electrical "noise" in the electrical utility system. Accordingly it would be desirable to eliminate the use of or reliance on any storage batteries and to provide a UPS system with controlled frequency, phase and voltage output, with no electronic semiconductors in the power path, that provides power to the load for at least 10 seconds with a high inertia low windage loss rotor, superior isolation from high voltage spikes on the power line, the ability to directly couple to an external engine or other prime mover for long term continuous protection and to provide a desirable load for the electric utility.

### PRIOR ART

This invention is an improvement over the inventions in our U.S. Patents 4,663,536, issued May 5, 1987, 4,600,873 issued July 15, 1986, 4,177,414 issued December 4, 1979, and 3,931,535 issued January 6, 1976.

The motor-generator structures shown and described in U.S. Patent 4,663,536 have two high windage loss rotor end plates and no shaft extending to the exterior of the casings enclosing their common motor and generator devices. Therefore no external engine can be connected in a practical manner thereto to drive the generators when power from the outside AC source is interrupted. In using this motor-generator, a separate standby engine and electrical generator must be started to supply AC to drive the motor thereof to generate AC when an outside power failure occurs.

In U.S. Patent 4,600,873 there is disclosed only a single stator and rotor motor unit and no conversion to, or its use as an electrical generator is disclosed.

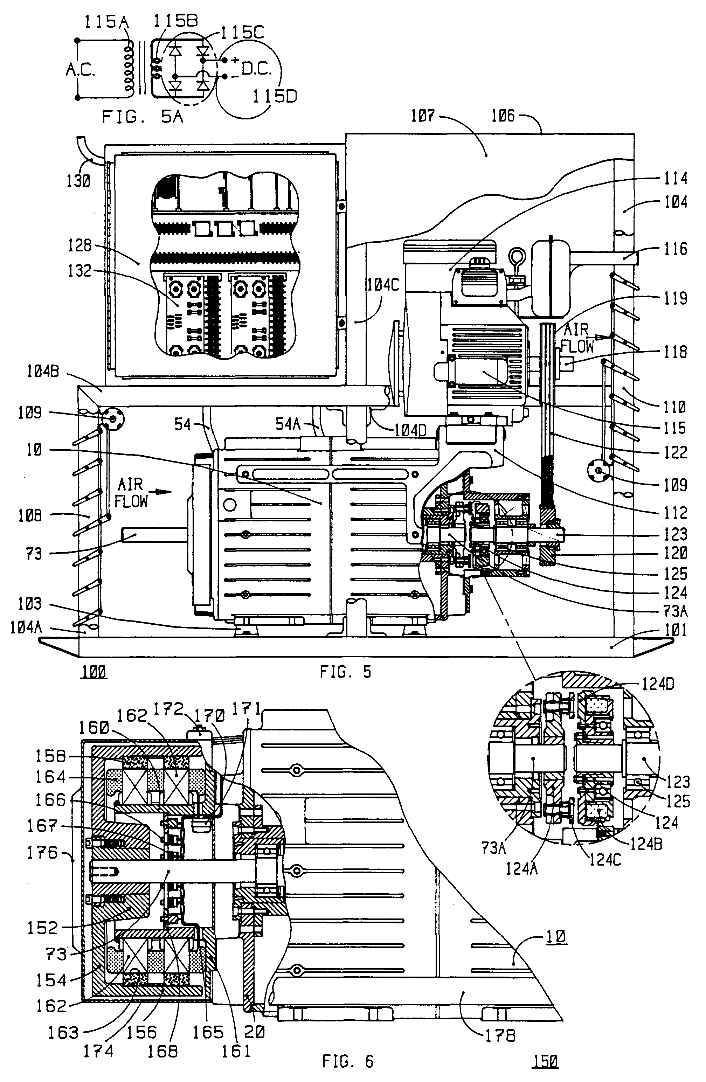

U.S. Patent 3,931,535 discloses a joint AC motor-generator unit where the induction motor rotates only the generator rotor so as to generate AC. Only Figure 5 shows a rotating shaft driven by the inside motor rotor while the stators are located about the peripheries of the induction motor and generator rotor elements. There is no teaching of the high rotational inertia design, synchronous operation and other features of the present inventions.

U.S. Patent 4,177,414 in which the present two inventors were the patentees, discloses employing a master AC generator and a second separate or slave AC generator, and an AC circuit to energize an excitation coil in the second generator with single-phase AC of a phase to produce a desired voltage from the two AC generators when connected in series. Means for shifting the phases of the single-phase AC are disclosed. Otherwise, the invention devices and the circuits therein are not anticipatory of the present invention.

In summary, none of these prior art patents teaches or discloses any of the critical features of the present invention.

### SUMMARY OF THE INVENTION

This invention, which is defined in the appended claim 1, comprises a unique versatile dynamo-electric machine having two stators each functioning with an electrical rotor, to enable the user to selectively operate it as a dual AC motor, or a dual AC generator, or an AC motor-generator, which machine comprises a casing or an enclosure within which are:
a) two separate electrical stators, each having main windings and at least one stator having at least one concentrated or exciter winding, and
b) a common rotor structure having a high rotational inertia sharing a common single drive plate, with two physically coupled and closely spaced, but separately operable electrical rotors, each rotor surrounding one of the stators, the rotors each comprising a high permeability, low loss core carrying a surface layer of magnetizable permanent magnetic material, which layer passes closely to the stator so that single-phase AC passing through the concentrated windings thereof will magnetize the adjacent magnetic layer into a written-pole pattern of north and south magnetic poles, and the magnetic poles so provided will react with the main windings in the stator to produce, when the stator-rotor is used as an AC generator, AC power of a desired voltage, frequency and phase for a load or when the stator-rotor is used as an AC motor to produce the desired torque characteristics. The machine has an external shaft from the rotor extending outside the enclosure or casing which can either drive a physical load, or can be driven by an engine or other prime mover.

Each stator and its associated electrical component rotor can function as either an AC motor or as an AC generator. When employed as an AC motor, the machine can start with very low current and can accelerate a very large inertial load without overheating. Thus the dynamo-electric machine can have both pairs of stator-rotor units function as (1) a common motor by simply passing AC to the main windings of each stator, with single-phase AC of the same frequency as the AC to the main windings being supplied to the concentrated windings of both stators, as (2) an AC generator by revolving the rotor and passing to the concentrated windings single-phase AC of the desired frequency desired for the AC power output load from both units, (3) and finally, the dynamo-electric machine can operate as a motor-generator with either stator-rotor pair of the machine functioning as the driving motor when AC of any desired frequency is supplied to its main windings, and single-phase AC of the same frequency is supplied to its concentrated winding and the other stator-rotor pair functioning as an AC generator with single-phase AC of the frequency desired for a load being supplied to its concentrated winding. The dynamo-electric machine can operate at synchronous speed with outside AC power supplied to it when it is functioning in the motor mode at one or both stator-rotor pairs. It has been found that the machine has an extremely high efficiency both because of its synchronous speed and its compact single rotor drive plate, and a close clearance construction resulting in low windage losses. Due to the high rotational inertia of the rotor, the machine has a prolonged ride-through time when there is an interruption of outside AC power to one or both pairs of stators and rotors when operating as a motor. The AC power output of any or both stator-rotor pairs operating as a generator can be held to a constant desired frequency and voltage even when the rotor speed changes, such as following an AC power interruption thereto, as long as its speed is about 80% or greater of synchronous speed.

Unique UPS systems can be provided by using as a critical component thereof, the dynamo-electric machine of this invention in the motor-generator mode, that is, one stator-rotor pair functioning as a motor and the other stator-rotor pair as an AC generator. No batteries are required to maintain, to start, or operate the dynamo-electric machine. An engine or other prime mover can be directly engaged through a clutch to the shaft of the dynamo-electric machine for rapid engine starting, and thereafter utilizing the engine to continue to keep the dynamo-electric machine operating, thereby to supply AC from the generator to the load when outside AC power to the motor thereof is interrupted.

Due primarily to its very low starting current and high efficiency at full running speed, the dynamo-electric machine of this invention has been found to be exceptionally useful when it is supplied single-phase AC and it is operating as a single-phase AC motor. At the present time, single-phase electric AC motors are commercially available and used only in small ratings, not exceeding about 10 to 12 horsepower (7 1/2 to 9 kW). At the higher ratings the larger commercial single-phase motors are considered unreliable and are relatively inefficient, and utilities object to their use because of their grossly excessive starting current demand. The inventors have tested single-phase motors of up to 40 horsepower using the dual stator-rotor construction herein disclosed and found them to start with low inrush current, easily accelerate a very high inertial load without overheating, readily reach synchronous speed and operate properly, with high electrical efficiency, exceeding that of any known prior art single-phase AC motors.

### DESCRIPTION OF DRAWINGS

Figure 1 is a graph showing the experienced quantity and time of duration of power interruptions in electric utility power lines in the U.S.

Figure 2 is a longitudinal cross-section in a vertical plane of a versatile dynamo-electric machine of the present invention.

Figure 2A is a partial cross-section in a vertical plane of a modification of the machine shown in Figure 2.

Figure 3 is a transverse vertical cross-section along line III of Figure 2.

Figure 4 is a diagram plotting ride-through time of a dynamo-electric machine of Figure 2, in which at least one stator-rotor operates as a motor, wherein shaft RPM is plotted against time after an AC power interruption thereto.

Figure 5 is a frontal elevation of a UPS system, partly broken and partly in section, embodying the dynamo-electric machine of Figure 2.

Figure 5A is a circuit diagram of an AC to DC supply for an engine starter motor.

Figure 6 is a vertical cross-section of a supplemental generator unit to be attached to the dynamo-electric machine of Figure 2 for producing low-ripple DC.

Figure 7 is a circuit diagram of two circuits comprising circuits 7A and 7B, each suitable for supplying single-phase AC to enable efficient operation of the AC motor of Figure 2, Figure 5, Figure 6, Figure 9 or Figure 10.

Figure 8 is a graph plotting efficiency curves of conventional single-phase motors and a single-phase motor of the present invention.

Figure 9 is a longitudinal vertical cross-section view of a less desirable modification comprising a dynamo-electric machine similar to that of the invention but constructed with only a single stator-rotor pair.

Figure 10 is a frontal elevation of a modified UPS system, partly in section, embodying the dynamo-electric machine of Figure 2 and capable of supporting both a mechanical and an electrical load simultaneously.

Figure 11 is a circuit diagram for supplying AC power to the dynamo-electric machine of Figure 2, operating as a motor, to enable starting with very low inrush current.

Figure 12 is a circuit diagram comprising three circuits, 12A, 12B and 12C, for supplying AC power to the dynamo-electric machine of Figure 2, functioning as a motor, Figure 12B to provide high torque starting and Figure 12C for efficient full speed operation and also to enable the input power factor of the motor to be modified.

### DETAILED DESCRIPTION OF THE INVENTION

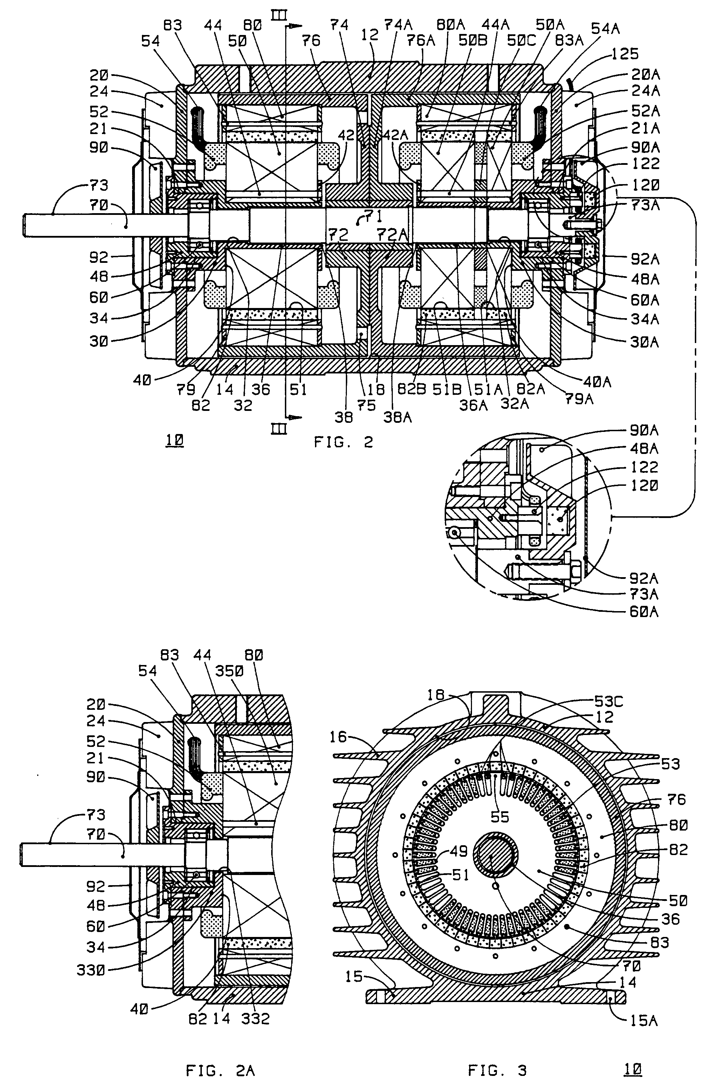

Referring to the drawing, there is shown in Figure 2 a vertical cross section along a horizontal axis, of a dynamo-electric machine 10 of the present invention, and Figure 3 is a vertical cross section along line III-III of Figure 2. The dynamo-electric machine 10 comprises an open-ended outer casing 12 having an integral base 14 provided with feet or lugs 15, as best seen in Figure 3, having holes or slots 15A through which bolts or other fastening means may be applied to fasten the machine down upon a support when in use. The casing 12 may be a single steel or aluminum casting, or may be fabricated from separate castings or components, welded and/or bolted together. The exterior of the casing 12 may be provided with integrally cast cooling fins 16. A smooth surfaced circular cylindrical bore 18 extends from one end to the other of the casting along a longitudinal horizontal axis thereof. End bells 20 and 20A are removably affixed, as by machine screws, to each open end of the casing to form a tight enclosure therewith. Cooling fins 24 and 24A are desirably provided on each of the end bell's exterior surfaces.

Each end bell 20 and 20A has a large central aperture 21 and 21A, respectively, and at the interior surfaces of each of the end bells adjacent to these central apertures, there are affixed, as by machine screws for example, heavy based stator support spindles 30 and 30A, respectively. It is desirable that the contacting surfaces of the end bells and the spindles where they meet be smooth and conform to each other so that heat generated in the stator placed on each spindle may readily flow from the spindles to the end bells. Each stator support spindle 30 and 30A, has a longitudinal hollow circular bore 36 and 36A, respectively, extending entirely through it, and such bore desirably progresses from a large diameter at its outer or aperture attachment end at 34 and 34A, to a smallest diameter section 32 and 32A, which terminates at a spindle inner end 38 and 38A, respectively. The spindle inner ends 38 and 38A are coaxial with each other and are spaced apart a substantial distance to provide a space, for a reason to be brought out subsequently.

Upon the outside of each of the spindles are placed stators comprising a single core 50 on the left spindle; and separate cores 50A and 50B on the right spindle, with a spacer 50C disposed between them, each core being of a low coercive force, low loss magnetic material, such as laminations of silicon steel, joined into a stack and having an outer circular cylindrical surface 51, 51A and 51B. The axial length of core 50B is preferably significantly longer than that of core 50A. Each stator core has an inner bore as small as the outer diameter of spindle 30 at spindle inner end 38, and 30A at inner end 38A so that each core will fit tightly thereon when slipped over the end and on to the body of spindle. In assembly, the core 50 is pushed over the spindle end 38 and abutted against a shoulder 40 on the spindle. A retaining washer 42 having a central hole just fitting over the spindle end 38 is applied firmly against the end of the stator core 50 and when so positioned the washer may be welded or otherwise fastened fixedly to the spindle end 38. An insulated rod 44 may be fitted into a hole in the washer 42 aligned with a hole in core 50 and locked in place, as by an adhesive, to keep the core laminations from turning. The right hand stator cores 50A and 50B are similarly fitted over and rigidly joined to their spindle 30A. As best seen in Figure 3, the stators 50, 50A, and 50B have longitudinal slots 49 in their respective circular cylindrical outer surfaces 51, 51A, and 51B, and in most of these slots are placed main windings 53, and having at least one concentrated winding 53C with each side of the concentrated winding placed in one to three adjacent slots 49 separated by a relatively narrow pole 55 in each of the stators. The slots 49 are arranged generally parallel to the axis of the core 50, but may be skewed. Cores 50A and 50B are spaced apart by the spacer 50C to allow each core to contain separate individual concentrated windings with their end turns being located the space provided at spacer 50C, but with the main windings passing through matching slots of both cores 50A and 50B. With the dynamo-electric machine at an operating speed, by changing the phase of the single-phase current in the concentrated winding in core 50A relative to the phase of the single-phase current in the concentrated winding in core 50B, the magnetic pole positions in the magnetic layers on the rotor which are described hereinafter will be similarly shifted thereby modifying the voltage generated in the common main windings of stator 50A and 50B. Separate electrical leads 54 and 54A, with portions of each connected to both the main and concentrated windings, of course, insulated from each other, extend from each core and pass through the end bells or the casing wall, using an insulating bushing or the equivalent for this purpose. For some applications, such as use of the entire machine 10 as an AC motor, it may be desirable to have both stators 50A and 50B constructed in one piece as that shown for stator 50. For meeting other requirements, both stators including 50 may be constructed with two separate core sections, such as that shown at 50A and 50B. If the stator 50 is to be used as a motor, the portion of leads 54 going to the main windings of stator 50 will be connected to a source of AC power such as a utility line while the portion of the leads from the concentrated winding will be connected to a source of single-phase AC of the same frequency as that to the main windings. For some requirements only one stator may contain concentrated windings. The main windings in both stators 50, 50A and 508 therein are wound and arranged in the slots to produce a rotating magnetic field when energized with poly-phase AC.

In providing a rotor for the machine, there is placed a bearing retaining member or hub 48 and 48A within the large diameter portion 34 and 34A in each of the support spindles. As is shown, a ball bearing or roller bearing 60 and 60A is placed in an internal bore in each hub member with the outer races of at least one of the bearings being retained between a snap ring and spring washer. The spring washer rides against an inner shoulder of the hub member thereby allowing the bearing to move slightly to compensate for thermal expansion. The assembly is pushed into the largest hub portion 34 or 34A of the spindle 30 or 30A and each is fastened firmly to the end bell, as by machine screws. The hub members 48 and 48A hold the bearing so that the hub members with the bearings therein can be easily removed for servicing. There is a shaft 70 that extends the full length of the machine and has its ends fitted snugly within the inner races of the bearings 60 and 60A. The shaft 70 has at least one end 73 projecting beyond the end bell 20, however the other end 73A of the shaft may or may not extend beyond end bell 20A. The shaft portion between the bearings has an exterior diameter that conforms to the hollow spindle portions through which it passes and there is only a small selected clearance between the shaft and the inside hollow spindle portions 36 and 36A, with the least clearance between the shaft and spindle bore at sections 32 and 32A. The inner surface of the spindle at 32 and 32A may be lined or coated with an anti-friction material such as a lubricant filled plastic material which normally does not touch the shaft 70. This is to reduce the potential of machine damage if either main bearing 60 or 60A fails. In the event of bearing failure, the shaft will then ride on this anti-friction layer until rotation ceases. The central portion of the shaft 70 has a substantially stiffer enlarged diameter portion 71 since this section will carry the high rotational inertia components of the rotor. Upon the periphery of enlarged portion 71 are firmly attached hubs 72 and 72A of two strong large circular radial plate members 74 and 74A meeting together and joined to function as a single drive plate that extends to a periphery thereof nearly at the inner bore 18, but with a small peripheral clearance therebetween. Located a short distance from the outer periphery of plate 74 and 74A are several non-aligned holes 75 in plate 74 and in plate 74A (the latter hole not shown) through the plate to allow air flow through the core windings and into the clearance space at bore 18. The holes 75 in plate 74A are of the same diameter but displaced at an angle from the holes in plate 74 to avoid electrical or electromagnetic communication between windings 52 and 52A. Plates 74 and 74A may be manufactured as a single piece, however this is not the preferred embodiment. At the outside peripheral portion on the sides of the radial plate members 74 and 74A are affixed circular cylindrical sleeves 76 and 76A which each enclose the stator cores 50 and 50A, respectively. These sleeves 76 and 76A may be cast or forged as a part of plates 74 and 74A. A small clearance between the outer surface of the sleeves and the inner bore 18 is desired since it has been found that, contrary to normal expectancy, windage losses due to sleeve rotation decrease as the clearance space is smaller. However, the clearance should be slightly greater than that between the shaft 70 and spindle bore at section 32. The shaft to spindle clearance at 32 and 32A is chosen such that these surfaces will touch before the outer surface of rotor shell 76 and 76A can touch the inner bore of the frame 18 or the inner bore of the magnet layer 82, 82A, and 82B can touch the outer surface of the cores 51, 51A, and 51B, thereby preventing major or total damage in case of a bearing failure.

The cylindrical inside surfaces of the sleeves 76 and 76A are concentric with the outer circular surfaces of their respective stator cores, and on each of these inner sleeve surfaces are attached an electrical rotor core, 80 and 80A. As best viewed in Figure 3, each rotor core 80 and 80A comprises a low coercive force magnetic material such as a stack of ring shaped punchings of silicon steel. Metal rotor bars 83 and 83A may be employed to improve the starting characteristics of the machine as a motor or the electrical characteristics in a generator, the metal bars are passed through each core 80 which has holes therein in which the metal bars 83 fit snugly and may be attached by welds to end rings. The characteristics and location of these bars are such that the magnetic flux produced by concentrated winding 53C is not significantly impaired. The stack of laminations on the rotor has an outer surface of cylindrical shape that closely matches the inner cylindrical surface of each of the sleeves 76 and 76A and may be immovably held in place by welding or by placing an end ring 79 and 79A at the inner surface of 76 and 76A to hold the outer ends of the cores 80 and 80A tightly against another inside end ring, fixed to the rotor shell, and the rings are welded or otherwise affixed to the shell 76 and 76A. The inner surface of each of the rotor cores 80 and 80A is of a circular cylindrical shape and is concentric with the stator surfaces 51, 51A, and 51B. Upon each of these inner surfaces of the rotor core there is firmly attached, with an epoxy resin or other suitable adhesive, a uniformly thick layer 82 of low electrical conductivity magnetizable permanent magnetic material, such as a ferrite, across the whole exposed inner surface of core 80 and similar spaced apart layers 82A and 82B on the surrounding surface of core 80A. The exposed surface of this layer 82 is spaced at a uniform clearance distance from the surface 51 of the stator, and layers 82A and 82B are spaced a similar distance from surfaces 51A and 51B, and all the layers are generally coextensive with their adjacent stator surfaces. In operation, as the rotor revolves about the stators, the concentrated winding 53C located in each core, when energized with single-phase AC, will generate a pattern of successive north and south magnetic poles in the ferrite layers 82, 82A, or 82B as they rotate past the stator. Suitable circuitry, and its mode of operation is set forth in U.S. Patent 4,177,414 and in Figures 1, 2, 3 and 6 thereof in particular, is usable for energizing the concentrated windings in stators 50A and 50B with properly phased single-phase AC, and thereby control and regulate the AC voltage produced in the main windings in these two stators when operating as a generator. Briefly, when an AC voltage output sensor detects a variance in the voltage output from the main windings 53 with respect to a standard voltage, a voltage magnitude control and shifter such as shown in Figure 1 of U.S. Patent 4,177,414 operates through a driver and inverter to shift the phase of the AC going to the concentrated coil in the smaller stator core 50A, with respect to the phase of the AC going to the concentrated winding in the larger stator core 50B. The north and south magnetic poles in the magnetic layers 82A and 82B will shift with respect to each other, and as a consequence the AC voltage generated in the main winding which passes through both stators 50A and 50B increases or decreases accordingly. Since only small voltage variances usually occur, a small stator core 50A can be employed in which the phase shifting of the AC with respect to the AC in the other concentrated winding is to take place. Unless the output phase of the generator needs to be changed, to parallel with another AC source of the same frequency for example, the phase of the single-phase AC in the concentrated winding in stator core 50B usually remains constant. It will be evident that unexpected benefits, such as precisely controlled AC output, are obtained from the two stator-rotor generator units in a single machine 10.

The construction employing the hollow spindles 30 and 30A for mounting the stators on the end bells is a preferred embodiment of the invention having a number of advantages. However, a simpler stator mounting construction may be employed as shown in Figure 2A, wherein there is firmly attached to each end bell (only the left end bell 20 being shown), a stator support 330 comprising a circular plate having a central circular shouldered aperture 332 through which the rotor shaft 70 passes. The shouldered aperture 332 has a circular internal cylindrical area which has a small predetermined clearance with the surface of the shaft 70. This shoulder at 332 will prevent the shaft from damaging the windings or other parts of the machine in case the bearing 60, mounted as previously described, supporting the shaft, fails. The stator 350 with a large central aperture therein is fastened by a strong adhesive, such as an epoxy resin, or by machine screws or by bolts passing through the core, to the circular stator mounting and support plate 330. The outer end walls of the stator conform closely to its mating surfaces of the plate 330, and are held tightly against them so that heat generated during use of the stator can flow through the plate 330 to the end bell 20 where it can be dissipated to air passing over the exterior of the end bell. It will be understood that the other or inner faces of the two stators are separated by a space which accommodates the free rotation of radial plate members 74 and 74A carried by the shaft 70.

Referring to Figure 2, upon the ends of the shaft 70 extending beyond the bearings, at a point just outside of the end bells 20 and 20A, cooling fans 90 and 90A respectively may be attached so that during operation of the rotor the fans will blow air over the fins 24 and 24A on the end bells and thus remove heat that develops in the stators and is conducted thereto by the air movement inside the casing and being conducted thereto through the ends of the spindles 30 and 30A. Attached to each end bell are shields or shrouds 92 and 92A, preferably with deflecting peripheral edges which will help to direct the flow of cooling air across the cooling fins 16 on the casing.

Many varieties of magnetizable permanent magnetic material can be employed in both the motor and generator rotors of this invention. The layers 82, 82A and 82B for example, preferably are comprised of an electrically non-conductive permanent magnetic material such as a ferrite. Metallic permanent magnetic materials, such as the alnico alloys, can be employed, if they are fabricated in such a manner, as by mixing the powdered alnico metal material with a resinous binder, as to reduce eddy currents therein from the excitation flux to an acceptable level. Barium ferrites and/or strontium ferrites have given excellent results in the practice of this invention. Newer and improved types of ferrites and similar magnetizable permanent magnetic materials are presently being made available and still others are being developed and may be available in the future to use for producing the layers of magnetizable permanent magnetic material in the machine 10. The hysteresis curves of two ferrites that have given good results in motors and in generators are shown in Figure 6 of our U.S. Patent 4,466,536. An oriented barium ferrite that has been commercially available for some years, under the trade designation Grade 5 ferrite, was tested in a fixture representative of the magnetic paths in an operating motor by subjecting a 0.33 inch (0.84 cm) thick sample to a hysteresis loop test wherein a magnetizing force was applied in one direction and then in the opposite direction and the induction in gauss for the samples was plotted against oersteds of magnetizing force. Curve M in Figure 6 of U.S. Patent shows the hysteresis loop for this sample. The closed circuit magnetic parameters for this material are a Br of 0.4T (4000 gauss) and an Hc of 1.83×10⁵ A/m (2300 oersteds). Another available ferrite available under the designation 4112, when tested, exhibited a much squarer and exhibited a smaller hysteresis loop N in the Figure 6 of that U.S. Patent. This last ferrite exhibited closed circuit properties of a Br of about 0.43 T (4300 gauss), and about 9.55 × 10⁴ A/m (1200 oersteds) for Hc. This ferrite exhibits much lower hysteresis loss during rotor pole changing while maintaining a high energy product.

For many applications, it has been found desirable to have an independent source of AC power for the controls of the machine 10, and even more beneficially for the controls of UPS systems embodying the machine 10. It has been found that this can be readily accomplished by placing a relatively small permanent magnet AC generator on one of the shaft extensions such, for example, as at the right shaft end of 73A just outside of the end bell 20A. As shown in the enlarged detail of Figure 2, several small magnetized permanent magnets 120 are attached at a fixed radial distance upon the hub carrying the fan blades of fan 90A. There is attached to the end bell 20A, for example, on the exterior surface of the circular bearing hub 48A, a metal ring carrying a small electrical stator 122 with electrical windings therein. When the permanent magnets, arranged so that north and south poles alternately pass by the stator windings when the shaft 73A turns, they will generate an alternating current in the stator windings located in the core of stator 122. An electrical lead 125 from the stator windings is provided to run along the outside surface of the end bell to the exterior from where it can be brought to a point of use in a control circuit.

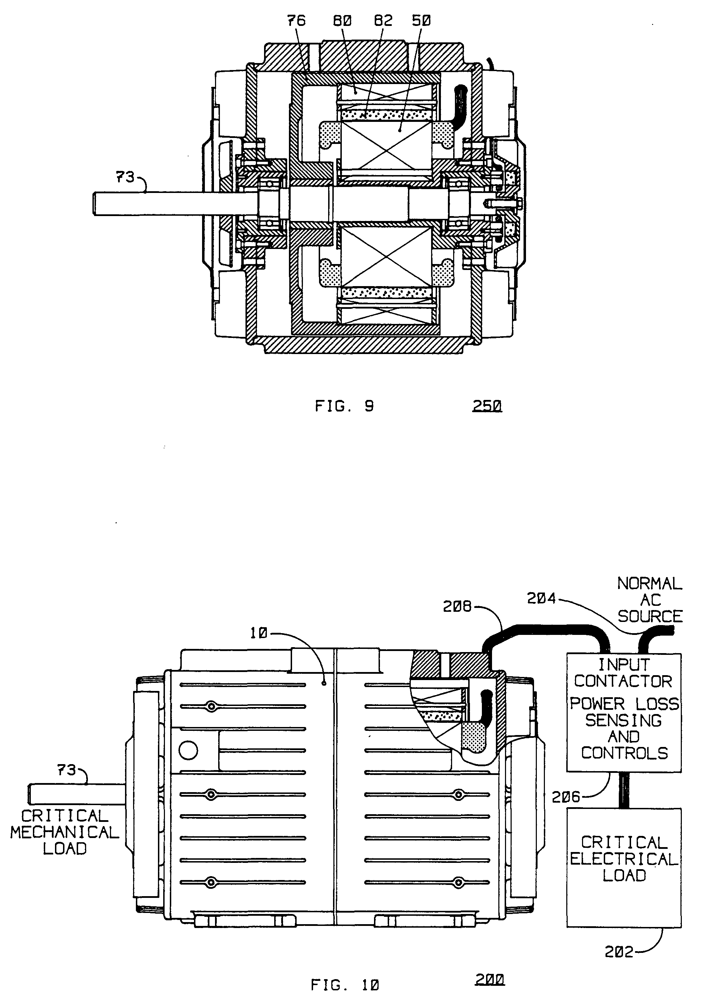

As previously mentioned, the versatile dynamo-electric machine 10 of Figures 2 and 3 can operate with both pairs of stators and rotors functioning as an AC motor; or both pairs of rotor-stator units can function as AC generators; or either pair alone functioning as an AC motor and the other pair as an AC generator. In this last combination the machine 10 forms an extremely useful AC motor-generator machine. Referring to Figure 7, this motor-generator arrangement of the machine 10 is accomplished by simply connecting the leads from the main windings of either stator to a source of AC power, with the leads to its concentrated windings being connected through a switch to a source of single-phase AC of the same frequency as in the main windings as shown in Figure 7B or the concentrated winding may be tuned with capacitor 324 as shown in Figure 7A. So connected, this stator-rotor pair will operate as a highly efficient AC motor. The other stator-rotor pair functions as a generator with the leads from the main windings being connected to a load, and the leads to the concentrated windings are supplied single-phase AC of the frequency required by the load, or in the cases where the load is not frequency sensitive, the concentrated windings may be connected to a capacitor as shown in Figure 7A.. In most cases in the United States and Canada, the AC is of a 60 Hz frequency. However, the motor can be operated by supplying 60 Hz AC to the motor windings of a two pole motor, and single-phase AC of a different frequency to the concentrated windings of the generator portion, and AC power at such different frequency will be produced by the generator and furnished to a load while the dynamo-electric machine is turning at synchronous speed. When the shaft is rotated by an external engine, both pairs of stator windings can be connected to generate AC which can supply the same or separate loads.

Outstanding benefits in the case of failure of outside AC power, are obtained when the dynamo-electric machine 10 is operating in the motor-generator mode. The very high rotational inertia of the rotor and the pole writing accomplished by the concentrated windings enables the machine to continue supplying AC power at full rated load of a desired frequency and at a desired voltage for relatively long periods of time of the order of from 10 to 20 seconds after the AC power supply to the motor has been interrupted. Due to this long ride-through property, the motor-generator mode use of the machine 10 of Figures 2 and 3 has great utility for many sensitive applications depending on continuous AC power for their functioning. This long ride-through time allows sufficient time for supplying AC to the load when only a short time of, up to as much as 10 seconds, interruption of the outside AC source occurs and when AC power is again available, which represents the great majority (up to 86%) of power interruption incidents as shown in Figure 1. When the usable AC power supply from the power line is resumed, the motor will speed up rapidly to its normal running speed. If a longer line interruption occurs, then the long ride-through allows putting into operation alternate AC electrical power sources such as a separate engine driven AC generator. Such alternate AC power source generates AC that is passed to the motor of the machine 10 which continues generating AC to supply the AC load so that the load equipment being energized operates without any interruption, and the AC to the load is at its required voltage and frequency at all times. Also of great importance, the construction of the dynamo-electric machine 10 provides virtually total electrical and magnetic isolation between the windings 52 and 52A, yet maintains the simplicity of a compact two bearing construction.

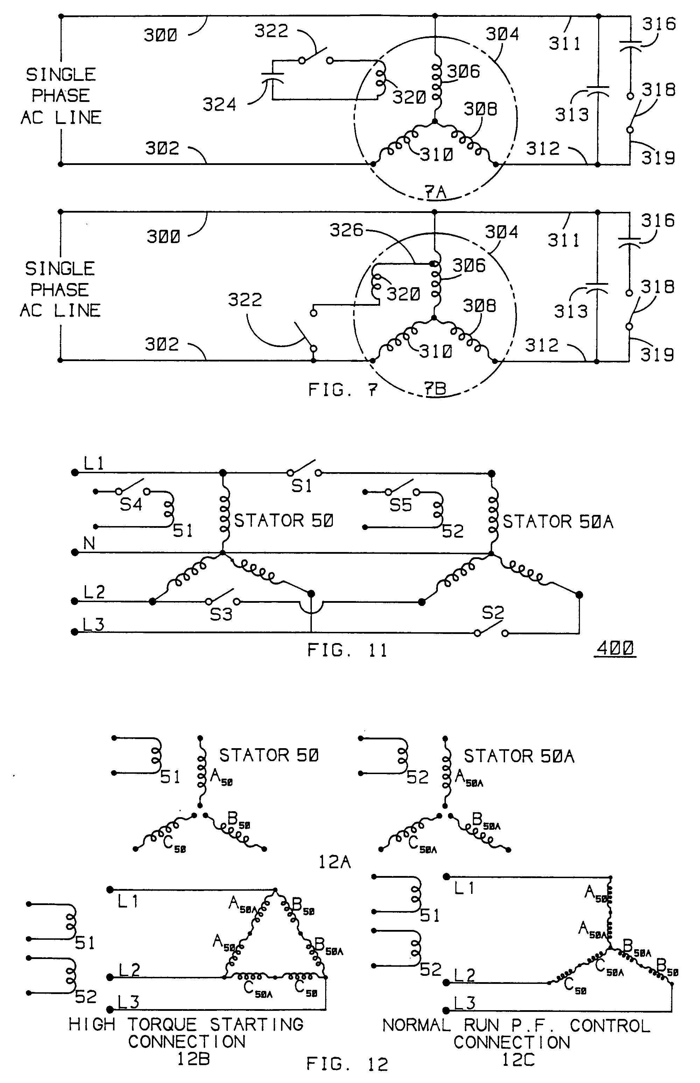

Referring to Figure 4 of the drawings, there is shown in a graph the period of ride-through time supplied by a 40 horsepower (about 30 kW) unit of the Figure 2 construction operating on 60 Hz AC. This is from a two pole unit that operates at 3600 RPM at full running speed. When the AC power to the motor was interrupted, the AC machine of this invention maintained output to a full 40 horsepower (30 kW) load for more than 11 seconds before its speed decreased to 3000 RPM. When the load was reduced to a 30 horsepower (about 22.5 kW) level of use, the AC power output lasted over 15 seconds before the rotor slowed to 3000 RPM. Approximately 30% of the kinetic energy of the rotor is thereby converted to AC energy during this ride-through period. These are very useful long ride-through time intervals. As will be explained subsequently in detail, Figure 10 shows the application of this unit 10 to supply a mechanical load, such as a critical blower or pump, while simultaneously supplying a critical electrical load to maintain operation of the blower or pump and associated electrical controls during power interruptions lasting up to 10 seconds or more.

Further, the machine 10, operating as a motor-generator, can be directly associated with a driving engine in a relatively compact, reliable and simple package where in it can be directly driven by the engine at a selected time interval after an AC power interruption occurs from the outside AC source, whereby to keep on producing power from the generator without any break or significant change in the frequency or voltage of the power output to the load during such interval. Further, the previous AC motor component of the unit 10 can be readily and automatically converted into an AC generator rotated by the engine and connected to a circuit to supply lighting or other emergency power to equipment which would also have been interrupted by the failure of flow of the AC power from the original AC source.

Referring to Figure 5 of the drawings, there is shown such a compact, portable, and self contained UPS system 100 embodying the versatile dynamo-electric machine 10 shown and described in Figures 2 and 3. The machine 10 is mounted on a strong base 101 of fabricated steel, for example. On the base 101 are resilient isolation mounts 103 through which the feet 15 of the machine 10 are bolted to it. An enclosed housing 106 is attached to the base, and it comprises metal frame members 104, 104A, 104B, 104C, and 104D, all welded, bolted, or otherwise joined into a strong and firm framework. The exterior surfaces are covered with sheets 107 of steel or the like, attached to the frame members to form the enclosing cabinet or housing 106. In order to provide easy access into the cabinet, one or more of the panels, particularly on the front side seen in the drawing and the back on the opposite side, may be hinged lockable panels or doors, with flexible gasketing at the edges where they meet the framework. As shown somewhat schematically, the left hand side panel has a large aperture in which is fitted a movable air-intake louver 108 operated by a thermostatic control 109 in order to allow a controlled amount of cooling air to enter the cabinet. A louvered air outlet 110, which may also have a thermostatic control 109, is placed in the right hand panel on the opposite side, to allow heated air which has passed over the casing of machine 10 to escape from the cabinet housing 106.

Mounted on a bracket 112 attached to the casing of the dynamo-electric machine 10 is an engine 114, powerful enough to drive the rotor of machine 10 so as to produce full AC to the load when the AC source input to the motor has been interrupted for more than a selected period of a few seconds. An engine exhaust pipe 116 may project through the cabinet panel to the exterior where engine exhaust gases can be vented into a vent or stack. The engine 114 has a drive shaft 118 to which is fastened a pulley 119. Attached to machine 10 and aligned axially with shaft 73A, is a shaft 123 supported by a bearing pair 125 and attached to the outer face of an electrically operable clutch 124. A pulley 120 affixed to the end of shaft 123 is driveably connected to pulley 119 by drive belt means 122. The pulley diameters of 120 and 119 are determined by the ratio of the optimum engine speed and the desired rotor speed of the machine 10.

An enlarged view connected to the starting clutch portion of Figure 5 shows the details of the connection of the clutch components on the shaft end 73A of the machine 10, to the drive shaft 123 which latter is mounted on two bearings 125. Normally the shaft end 73A rotates and rotatably carries a portion that is the clutch drive disk proper 124A which comprises axially movable pads 124C, normally held in a retracted position by springs. Thus only the shaft 73A rotates and shaft 123 is stationary. The electrically operable portion 124 of the clutch has a stationary electro-magnet 124B supported by ball bearings, as shown, which when energized with electrical current produces a magnetic field that cause the pads 124C, which constitute the clutch face of 124A, to move out and come into firm magnetically attracted contact with a mating face 124D of clutch portion 124. When this occurs, the clutch engages with and causes the shaft 123 to be rotated by shaft 73A. Electrically operable clutches of this type are commercially available.

Except for testing, the electrically operable clutch 124 is normally not in an engaging position as long as AC power from the source operates the motor of the machine 10, and the power is not interrupted, allowing the shaft 123 and pulley 120 to remain stationary. However when the AC power is interrupted, the electro-magnet clutch 124B can be energized by an electrical control means at any time interval desired and the pulley 120 is immediately and firmly connected through shaft 123 to shaft 73A and turns with it as it rotates. On the loss of input AC power, electronic sensors associated with the AC power lines to the AC motor in the machine 10 will signal the electrical controls to immediately begin supplying single-phase AC to the concentrated windings of the generator in order to continue to supply the desired voltage, frequency and phase AC to the load. After a predetermined selected time interval which usually will be in the range of from about 3 to 10 seconds, and if AC power to the motor is not restarted, the controls will energize the clutch. The rotational energy of the rotor of the dynamo-electric machine 10 will then supply the torque necessary to start the engine so that it will rotate the rotor of machine 10 and thus continue producing in the AC generator thereof AC of the voltage and frequency needed by the load. If after a brief period when input AC from the source is lost, usable AC power is again available from the AC source, the electronic sensors will disengage the clutch and engine, if it has been started, close the switch in the motor leads to the AC source, and the AC motor and its concentrated windings will immediately be energized and will pick up speed, and in a short period the machine 10 will be running at full speed. When at full speed, the single-phase AC to the concentrated windings in both the generator and motor will normally be turned off. The load will be supplied without any break or interruption with AC of the desired voltage and frequency during all this time.

To sum up, about 90% of all power interruptions will not need the engine 114 being put into operation. If AC power is not restored in this initial selected period of from 3 to 10 seconds, the clutch 124 is energized. The pulley 120 will then drive belts 122 and thus drive the pulley 119 and the engine shaft 118 so as to rotate the engine. The electrical controls will concurrently turn on the engine ignition, fuel system and governor so that the engine can start promptly when its shaft is turned. A starting time of less than a second is readily obtainable. This easy and rapid start is particularly feasible because the warmed air from the machine 10 passes over the engine and keeps the engine 114 and its oil warm at all times during use and therefore at an optimum starting condition. One of the benefits of the delay in starting time is to reduce nuisance engine starting when the power outage lasts only a few seconds. The engine may be an air or water cooled gas engine, but diesel engines or other prime movers can be employed.

A separate control cabinet 128 is attached to the top panel of the left hand portion of the housing of cabinet 106. The outside AC power line cable 130 enters the cabinet where switches, the sensors, and controls 132 for both the machine 10 and the engine 114 are located. A lockable front door is preferably used on the cabinet 128. Leads 54 and 54A from the machine 10 also enter the cabinet wherein the sensors and switches operating on the electrical circuits determine the operation thereof, and function in response to interruption and the return of AC power from the AC source.

It may be desirable for several reasons to have the engine partially started before the clutch 124 is allowed to function. Since shaft 70 will still be rotating at a high speed when the clutch 124 is energized to cause it to engage the non-rotating shaft 124 which is connected by belts 122 to the non-rotating engine shaft 118, there will still be a heavy initial shock load experienced by the clutch 124 and the pulleys. In addition, a partially started engine can be lubricated to some extent before running at full speed. To effect a partial starting, there may be used a separate conventional type of engine starter, using 12 volt DC electrical power supplied to the electrical motor thereof, for example, in which the starter is operated at a time of about three seconds or so preceding the energizing of clutch 124. The 12 volt DC electrical power to the starter motor may be readily supplied by using the AC motor portion of the machine 10. When the outside AC power source is interrupted and the sensors operate the line switch to cut off power leads 54 thereof from the AC source, the stator 50 automatically begins to generate AC voltage in response to the magnetic poles in layer 82 in the still rotating rotor 50. When the interruption of power in the supply source occurs, the electrical sensor is programmed to function to connect to leads 54 to a circuit to a step-down transformer, schematically shown in Figure 5A, where the AC voltage from the main windings of stator 50 passes through the high voltage windings 115A in the step-down transformer, and this results in the low voltage windings 115B delivering an AC current of about 12 volts, for example, and this low voltage is rectified in a rectifier 115C to a DC voltage of 12 volts in the rectifier output leads 115D which are connected to a conventional engine starter having a direct current motor connected to an engine starter gear which, as is well known, turns a splined shaft on which a driving gear is thrown by centrifugal action to mesh with a pinion gear on the engine shaft and thus turns the engine shaft. When the engine reaches a speed of a few hundred revolutions per minute, it begins to run under its own power. At this point the engine starter gear automatically retracts and the starter motor may be turned off by a switch in circuit 115D. The engine being set in motion and accelerating, the switch operating clutch 124 will then be caused to close and clutch 124 applies full power to the still slowly rotating gear shaft to cause it to accelerate quickly to reach full speed.

For certain electrical equipment using constant AC power, for which the UPS system of Figure 5 could be beneficially employed, there is sometimes required an additional DC (direct current) supply of very low ripple. This requirement may be met by attaching to the end of the shaft extension 73 of the machine 10 in the Figure 5 UPS unit, a direct current generating unit 150 as shown in Figure 6 of the drawings. The unit 150 comprises a hub member 152 attached by bolts or the like to the end of the shaft extension 73, the hub member comprises a radially extending plate 154 which carries at its periphery a circular cylindrical rotor sleeve 156. On the inner surface of the rotor sleeve 156 is firmly attached a relatively uniformly thick layer 158 of magnetizable permanent magnetic material, such as a ferrite which can be magnetized into a large number of successive circumferentially arrayed north and south magnetic poles. The inner exposed surface of layer 158 is a surface of a circular cylindrical shape coaxial with shaft 73. A stator assembly cooperating with the rotor, is provided by attaching to the end bell 20 a cylindrical ring shaped metal plate 161 to which is attached an annular sleeve 160 which extends into the sleeve 156 to a point short of its inner wall. Upon the outer surface of the annular sleeve 160, is attached a stator core 162, for example, an annular ring of a plurality of stacked and bonded electrical steel laminations affixed to the exterior surface of sleeve 160 with slots in the outer surface 163 of the stack of laminations running parallel to or slightly skewed with respect to the shaft axis, with electrical main windings 164 being placed in the slots. These slots may contain concentrated windings similar to 53C in Figure 3 operable as previously described. There is a small clearance between the exterior surface 163 of the core 162 and the layer 158. The stator core may be a single continuous stack of laminations or, as shown, two (or more) separate stacks separated by a space, with a spacer between the core stacks. The space between the cores is to allow the placement on each core of individual concentrated windings similar to the separate concentrated windings 53C (Figure 3) in each stator core 50B and 50C, shown in Figure 2. During operation, if the phase of the current in one of the concentrated windings is changed relative to the phase of the current in the other, the magnetic poles in the magnetic layers on the rotor will be similarly displaced, thereby modifying the voltage generated in the total main windings 164. When the rotor revolves about the stator core 162, the alternate north and south magnetic poles in the layer 158 will generate a high frequency AC, in the order of several hundred Hertz, in the stator windings 164 and this current is carried by leads 165 to a rectifier assembly 166 which may comprise a series of diodes 167 affixed on a flat thermally conductive ring 168 attached to the inside surface of the sleeve 160. The diodes produce a direct current output with a very low ripple from the polyphase high frequency AC current from the stator, and two, or multiples of two, leads 170 pass through electrical filters 171, and then pass outside of the sleeve 160 to insulated electrical terminal posts 172 placed outside a protective enclosing casing 174 which is attached to the periphery of the end bell 20. The construction and relation of the rotor parts 154 and 156, support sleeve 160 and plate 161, outer housing 174 and filter 171 are such as to greatly reduce any electromagnetic radiation from diodes 167 and windings 164. Cooling fins 176 may be placed on the end of casing 174. Heat generated by the diodes 167 and windings 164 is conducted through the sleeve 160 and circular plate 161 to the cooling fins on end bell 20A. Additional cooling may be provided by passing air over the fins from fan 90 (Figure 2) through duct 178.

The dynamo-electric machine 10 of this invention, when one or both stator-rotor pairs operate as single-phase motors, has outstanding properties. The single-phase motor will easily start from stand-still with extremely low inrush current. Where prior art single-phase induction motors, in starting require an inrush current of from 6 to 11 times the full load running current, and such inrush currents are so large that they can cause such severe line voltage drop that electric utilities refuse to allow single-phase AC motors above about 10 horsepower (7.5 kW) to be put on a single-phase power line. By contrast, the single-phase motors of the present invention ordinarily will have an across-the-line starting current of about 2 times the full load running current, and these motors also have a running efficiency exceeding that of any known single-phase induction motor.

For starting a single-phase AC motor having the versatile dual stator-rotor pairs construction of this invention two different circuit arrangements may be employed. Figures 7A and 7B, in Figure 7, illustrate these two circuits. In Figure 7A, the single-phase AC power is carried by conductor lines 300 and 302 to the schematically shown motor 304 whose windings comprise main winding 306, 308 and 310 arranged in the slots of a stator so as to produce a rotating magnetic field when properly energized by the AC. Windings 306 and 310 receive single-phase AC directly from line 300 and 302 respectively. To supply single-phase AC power to core 308, single-phase AC from line 300 is conveyed by line 311 to one terminal of a running capacitor 313. The other terminal of the running capacitor 313 is connected by line 312 to the winding 308 of the motor. During motor operation, this running capacitor 313 is usually connected to the winding 308. In order to start the motor with a sufficiently high torque from a rotor stand-still condition, a starting capacitor 316, having more farads of capacity than the running capacitor 313, usually being from two to as much as ten times larger, receives single-phase AC from line 311 at one terminal, and the other terminal of this capacitor is connected by line 319 to line 312 and then to the winding 308 with a speed responsive switch 318 being inserted in line 319. The switch 318 is closed when the motor is being started and opens only after the rotor of the single-phase AC motor reaches about 70 to 90% of its synchronous speed. Speed responsive electronic switches suitable for such operation are available. Alternatively, there may be used a centrifugal switch on the rotor which is spring adjusted to let it open the circuit at a selected speed. The exciter or concentrated winding 320 of the motor is energized by the magnetic field in the cores 50 and 50A, and the poles created in the layer of magnetic material on the rotor as the rotor passes over the concentrated winding 320. The concentrated windings 320 are in an independent circuit comprising a circuit control switch 322 and a tuning capacitor 324. The switch 322 is closed when the rotor reaches 85-90% of synchronous speed. The concentrated winding will thereupon magnetize the layer of magnetizable permanent magnetic material into a pattern of north and south magnetic poles and this will greatly increase the motor torque and the switch 322 is opened when the motor reaches synchronous speed.

The circuit diagrammed in Figure 7B is essentially the same as that of Figure 7A except there is no capacitor in the circuit to the concentrated windings 320. In this latter Figure, a lead 322 from the single-phase line 302 goes to one terminal of switch 324 with the concentrated winding 320 connected to the other switch terminal. The other terminal of the concentrated winding 320 goes through a line 326 which is joined to a selected point in the main winding 306. The phase and level of voltage from the single-phase AC line 300 that is going to line 326 is regulated by such selected contact point in the main winding 306. The voltage and phase are selected to magnetize the rotor poles in a position to develop high torque when reacting to the rotational field of winding 306, 308, and 310. There are other well known main winding and starting-running capacitor configurations that can be utilized in single-phase motors which may be employed in certain cases. In any event the concentrated windings would be connected essentially as shown.

Single-phase AC motors comprising the dynamo-electric machine 10, have been constructed and tested with one or both pairs of stators and rotors operating as motors. Such single-phase AC motors have given outstanding operating results. Referring to Figure 8, there are shown graphs and a table comparing the performance of a typical, conventional, commercially available, single-phase nominal 12 horsepower (about 9 kW) AC motor available in the industry with data from a 40 horsepower (about 30 kW) motor single-phase AC motor such as the machine 10 constructed as shown in Figure 2 and 3.

At present, the commercially available 12 horsepower motor, when being started from stand-still, will draw 262 amperes from a 60 Hz 230 volt single-phase line, and at its full speed the motor delivered 12 horsepower and the current drawn was 47 amperes. It reached a top efficiency of 85%. Its power factor was .82. The single-phase motor constructed in accordance with the present invention of a 40 horsepower rating, required a starting current of 240 amperes at 240 volts. At full load its electrical efficiency exceeded 92%, and its power factor was in the range of .98 to 1.0. These outstanding results are all better in every respect than the results for the commercially available single-phase AC motors in the electrical industry today.

The use of single-phase motors of the present invention would be highly desirable in many areas at the present time. Due to the very low starting current of these motors, there are many single-phase electrical power lines that could advantageously use the single-phase motor of this invention for a multitude of applications. Remote oil wells could be pumped at desired intervals with remote control or automatic time switches connecting the single-phase motors with a single-phase AC power line. Sewage pumps, irrigation wells, and wells for watering golf courses and the like, could use the relatively inexpensive, high efficiency, reliable single-phase AC motors of this invention with available single-phase AC lines as compared to expensive diesel engines, or using 3-phase motors requiring phase converters or 3-phase AC power lines now being required. Many farms have single-phase AC available but are not presently able to use large electrical motors since there are no reliable low starting current single-phase motors in the large sizes they need. The single-phase AC motor of the present invention would easily and efficiently handle these needs using available single-phase power lines. The ability to operate the motor portion of the Figure 2 design from a single-phase AC source while supplying either single-phase or 3-phase power from the generator to a critical load is also very important for many applications.

Some industrial applications require not only a UPS system to furnish AC power to a load, but they also have a critical motor-driven mechanical load that needs to be kept functioning without interruption or for a period of time after AC power from the source is interrupted. One area for this dual need is in gas and other fuel fired ovens and in drying systems. Gas, for example, is supplied under pressure to a burner in an oven and an air supply fan or air blower must operate to steadily supply combustion air without any interruption to the burner in the combustion chamber of the oven to consume the gas. If the air fan or blower ceases to function and unburned gas is present in or is still flowing to the combustion chamber, an undesirable explosive mixture can form which would create a dangerous situation.

In Figure 10, there is shown a short period UPS system 200 that can supply mechanical power as well as electrical AC power to a critical electrical load 202, for a period of time, typically 10 to 20 seconds, after AC power from an AC source has ceased to flow in conductor 204 therefrom into a control unit 206 which supplies AC power through lead 208 to the UPS machine 200, which comprises a dynamo-electric machine 10. Shaft 73 of the machine 10 is connected to a fan or blower, for example by a pulley on the shaft and a belt drive (not shown) to a pulley connected to a fan or blower. If AC power is interrupted in conductor 204, the high rotational inertia in the dynamo-electric machine 10 will keep shaft 73 turning and the fan or blower will continue introducing air into a combustion area for a period of many seconds to assure the combustion of gases going to the oven. In most instances power will be restored before the lowest acceptable speed is reached and the combustion or other processes continue without interruption. In this period of time controls associated with the critical load 202 will be supported electrically and be able to terminate the flow of combustible material to the furnace if the power interruption lasts longer than 10 seconds or so and the air flow will purge the combustion chamber.

When both stator-rotor pairs of the dynamo-electric machine 10 are operated as a dual AC motor, a number of desirable operating advantages can be obtained by applying the AC from an AC power source to the stator windings in selected ways through certain circuitry arrangements. One such operating advantage can be secured when it is desired to minimize the inrush starting current when the motor unit is being started from stand-still and accelerated to full speed. Another significant advantage can be obtained when the dual motor machine 10 is connected to a very heavy load and a high torque is needed to start the load and to get it to full speed. Such a heavy load occurs in coal and stone crushers, and also when a gas or air compressor being operated by the motor is operating against a high pressure in a compressed air or gas tank, and the driving motor must start from a stand-still condition. A third beneficial condition is met when it is important to control the input power factor when the motor is running at full speed.

In the first case, namely, the lowest inrush current operation, the dual motor dynamo-electric motor unit is started by initially applying AC power to only one stator-rotor pair and thereby accelerating the rotor slowly, at about half the rate if both stator and rotor pairs were being simultaneously energized. A suitable circuit to accomplish this is shown in Figure 11, wherein a three-phase line comprising line conductors L, L2, and L3 with a voltage rating, for example, of 208 volts, supplies AC to both stator 50 and 50A. In this particular application, both stators are wound alike and each comprises a single core with three main and at least one concentrated winding. In starting, switches S1, S2, and S3 are open and no AC voltage is supplied to stator 50A. When the main line switch to the AC power source line (not shown) is closed, AC at 208 volts is supplied to the three main windings of stator 50, producing a rotating magnetic field which causes induction and hysteresis torque to be developed in the rotor. Under these starting conditions an inrush current of very low amperage is drawn from the AC power line. The rotor accelerates at about half the normal rate that it would if both stators and rotors were to be energized with AC power. When the rotor speed reaches over about 75% of full or synchronous speed, i.e. the rotor is at about 2700 RPM for a two pole machine with 60 Hz AC input, the switches S1, S2, and S3 are closed so that the main windings in stator 50A are energized. When the rotor reaches about 85-90% of synchronous speed, switches S4 and S5 are closed so that the concentrated windings in the stators will generate magnetic poles in its associated magnetic layer as previously described and with an increased torque induced thereby the rotor will accelerate rapidly and will reach its full or synchronous speed quite quickly.

When the dual motor unit 10, has to start under a high load, the circuits shown in Figure 12 are advantageously used. In Figure 12A, the circuits to the stators 50 and 50A are shown schematically, wherein, stator 50 has three main windings A50, B50, and C50, while stator 50A has three main windings A50A, B50A, and C50A. For a line voltage 208 volts, each of the main windings will be wound for about 80 volts, or a total of about 160 volts when each pair of stators are serially connected in a delta circuit arrangement as shown in Figure 12B. A circuit is provided so that for starting, a three pole switch will join all the main windings of both stators into the delta configuration of Figure 12B. This results in a higher than normal starting current passing through all the main windings and this causes a very high starting torque condition by reaction of this large rotating magnetic field with the magnetic layers of both rotors, and this high torque will move the rotor against any reasonable heavy load. The starting or inrush current is necessarily higher than normal, but it still will be greatly less than that of a conventional squirrel-cage induction motor of the same rating. The rotor will accelerate and when a predetermined speed is reached, which may be set at from about 90% to 100% of synchronous speed, the three pole switches to the lines to the main windings are operated to a second position so as to connect the main windings in a wye arrangement as shown in Figure 12C, and the dual AC motor unit will then operate in a normal torque condition. When the rotor reaches about 85% to 90% of its full running speed, the concentrated windings 51 and 52 of both stators will be energized with single-phase AC of the same frequency as the AC in the main windings, so that the magnetic layers 82 and 82A will be magnetized into a magnetic pole pattern that will react strongly with the rotating fields of the main windings and the rotor will accelerate rapidly to reach synchronous speed. Depending on the particular characteristics desired, the concentrated windings 51 and 52 may be connected in the same manner as winding 320 is shown in Figure 7 or 7A. When connected in a wye connection, the main windings being wound for the voltages involved, the motor is capable of operating at unity power factor with line voltages as high as 270 volts, based on this nominal 208 volts example, when at full speed. At lower voltages this will allow the motor to operate with a leading power factor. This last will allow the motor to benefit the utility power lines so as to compensate for a lagging power factor on the utility power line caused by such loads as conventional induction motors. Further, by varying the phase in one of the concentrated windings as compared to the phase in any of the other concentrated windings in the stator, the total back EMF being generated by the main windings in the stator will be modified. This will allow the input power factor of the motor to be adjusted advantageously to meet various operating conditions.

Usually the concentrated windings in either or both of the motor stators of machine 10, are supplied single-phase AC only during the starting of the motor until the rotor reaches synchronous speed. Once synchronous speed is reached, the supply of single-phase AC to the concentrated windings is terminated by opening the circuit thereto in Figure 7, the switches 322 are opened, and in Figure 11, switches S4 and S5 are opened. These switches in the circuits to the concentrated windings may be controlled by a sensor operating upon synchronous speed being reached. However, it may be desirable to close the switches to the concentrated windings at intervals to supply single-phase AC to correct the rotor magnetic field or overcome "hunting" or fluctuating rotor speeds, and thus bring the rotors back to synchronous speed. This timed re-energizing of the concentrated windings need be for only a brief period of a second or so.

The circuits in Figures 11 and 12 and the detailed description of their use were specific to a three-phase AC power source for operating the dual AC motor configuration. However, similar benefits can be obtained when single-phase AC is supplied to the main windings of both stators. The circuits shown in Figure 7 can be used in such single-phase motor operation. There are commercially available wye to delta starters that can be used for the delta to wye switching configurations for the single-phase motor windings.

After studying the construction of the dynamo-electric machine shown in Figure 2, it will be obvious to those skilled in the art that a machine could be built utilizing only one stator-rotor pair 250 as shown in Figure 9. This might be applicable where smaller machines of lesser rating were needed however some of the important benefits listed above that are obtainable with the dual stator-rotor construction shown in Figure 2 would be lost.

## Claims

1. A versatile dynamo-electric machine (10) comprising:
a solid metal machine casing (12) having a cylindrical inner bore (18) extending from one end to the other and end bells (20, 20A) attached to each end of said casing to form an enclosed housing;
two annular ring shaped independent stators (50), each stator having one inner end affixed to and supported by the casing end bells for transfer of heat from said stators to said casing, and having an opposite end extending inwardly from said end bells into the cylindrical bore (18) so as to define an axial separation space therebetween, each stator having a central axial aperture extending therethrough;
each stator (50) having an outer cylindrical surface (51) coaxial with said bore axis and having axially disposed slots (49) formed thereon, each stator (50) having a main electrical winding (53) positioned in most of said slots, and at least one core containing at least one pair of adjacent slots with a concentrated winding (53C) in the pair of adjacent slots, electrical leads (54) to the concentrated windings connected to a source of a single phase AC through its leads, and leads to the main windings (53) configured for connection to at least one of a source of AC power and a load, said main windings (53) being arranged in said core slots (49) to produce a rotating magnetic field when energised by AC current;
a rotor shaft (70) disposed within and coaxially of said bore, first and second bearings (60, 60A) for rotatably supporting said rotor shaft, one of said bearings affixed to each of said end bells (20, 20A) with at least one end of (73) of said shaft extending to the exterior of the casing, (12), said rotor shaft (70) passing through said central axial aperture of said stator cores with a clearance space therebetween; and
at the axial separation space between the stators, components having a high rotational inertia, said components comprising:
a circular metal drive plate (74) being affixed to said rotor shaft and extending radially outwardly at said axial separation space between said stators;
two circular cylindrical sleeves (76, 76A) formed around the outer periphery of said stators, one sleeve being attached to each side of the periphery of said drive plate and defining a small clearance space between the inner surface of said bore and the outer surface of said sleeves, said sleeves respectively defining two independent electrical rotor elements, one for each of said stators, each of said stators being electrically and magnetically isolated from the other stator by the assembly of the circular metal drive plate (74), the cylindrical sleeves and said shaft, the interior surface of each sleeve having affixed thereto an annular cylindrical layer of low coercive force magnetic material; and
a layer of re-magnetisable permanent magnetic material (82) supported within each of said sleeves and having an exposed innermost cylindrical surface substantially coextensive with and closely spaced to the outer cylindrical surface of each of said stators,
whereby either or both of the stator cores and its adjacent rotor being operable as (1) a motor when its leads to the main windings are connected to a source of AC power, and the leads to the concentrated winding are connected through a controlled switch to a source of single-phase AC of the same frequency as the AC power, or (2) as an AC generator when the leads to the concentrated winding thereof are connected through a controlled switch to a single-phase AC of the frequency desired for an AC power output from the generator, and the shaft is rotated, and (3) both stators and their adjacent rotors being operable simultaneously, one stator connected as a motor, the other stator connected as an AC generator.

2. The versatile dynamo-electric machine (10) of claim 1 wherein said stators (50) and adjacent rotors (80) are operable as an AC motor when said leads (54) to the main windings are connected to a source of AC power to produce a rotating magnetic field in said stator, the leads to the concentrated winding are connected to a source of single-phase AC of the same frequency as the AC power, and said source of single-phase AC is of sufficient magnitude so as to magnetize said layer of re-magnetizable permanent magnetic material (82) into alternate and successive north and south magnetic fields.

3. The versatile dynamo-electric machine (10) of claim 2 wherein said magnetic poles react with said rotating magnetic fields in said adjacent stator (50) to cause said motor to rapidly reach and maintain synchronous speed from speeds below the synchronous speed of rotation.

4. The versatile dynamo-electric machine (10) of claim 1 wherein said stators (50) and adjacent rotors (80) are operable as an AC generator when the leads (54) to the concentrated windings are connected to a source of single-phase AC of the same frequency as desired for a load, and said source of single-phase AC is of sufficient magnitude so as to magnetize said layer of re-magnetizable permanent magnetic material (82) into alternate and successive north and south magnetic fields.

5. The versatile dynamo-electric machine (10) of claim 4, wherein rotation of said rotor (80) produces an AC potential in the main electrical windings (53) in the stator (50) which is the same frequency as in the excitation windings, and the AC potential will be conveyed to the leads from these main windings to the load.

6. The versatile dynamo-electric machine (10) of claim 1 wherein said stator cores (50A, 50B) and adjacent rotors (80) are operable as a motor-generator when one stator-rotor pair is operated as an AC motor for driving the rotor (80) of the other stator-rotor pair for operation as an AC generator.

7. The versatile dynamo-electric machine (10) of claim 6 wherein said rotational inertia of the rotor assembly enables the AC generator pair to generate AC of a desired frequency for a prolonged period of time to a load when external AC power to the stator-rotor pair operated as an AC motor is interrupted.

8. The versatile dynamo-electric machine (10) of claim 1 wherein at least one of said stators (50) and its adjacent rotor (80) is configured to function as an AC generator and said slots (49) in each of said stators (50) are axially aligned and said main winding (53) for each of said stators is the same, and the main windings pass through slots of both stator sections.

9. The versatile dynamo-electric machine (10) of claim 8 wherein separate concentrated windings (53C) are provided for each of said stators so that distinct AC currents can be concurrently passed through each concentrated winding.

10. The versatile dynamo-electric machine (10) of claim 1 further comprising a DC generator component provided at one end of said rotatable shaft (70) projecting beyond an end wall of the casing (12).

11. The versatile dynamo-electric machine (10) of claim 10 wherein said DC generator component is comprised of a relatively large circular plate (154) rotatable with the shaft and having affixed to its periphery a circular cylindrical shell (156) of low coercive force magnetic material coaxial with and extending inwardly toward the shaft, a layer of re-magnetizable permanent magnetic material (158) affixed to the inside wall of the shell, the layer having an exposed circular cylindrical surface coaxial with the shaft, the combined circular plate, the cylindrical shell and the affixed layer of magnetic material forming the rotor of said DC generator.

12. The versatile dynamo-electric machine (10) of claim 11 wherein said DC generator component is further comprised of a stator co-operating magnetically with said rotor of said DC generator, said stator comprised of a smaller diameter circular cylindrical shell (160) firmly attached to the machine casing end wall and projecting toward said shell to a point short of the circular plate, the exterior cylindrical surface for the smaller shell having firmly attached thereto a slotted stator core (162) of cylindrical shape extending nearly to and being substantially coextensive with the layer of magnetizable material on the rotor with a rotational clearance space therebetween, and electrical windings disposed in slots on the outer surface of the stator core so as to produce an AC voltage when the layer of magnetised permanent magnetic material on the rotor revolves about the stator.

13. The versatile dynamo-electric machine (10) according to claim 12 further comprising electrical rectifying elements (167) and electrical filter elements (171), leads (165) provided form the stator windings to the rectifying and filter elements to enable a rectified direct current to be produced, and electrical leads (170) from the rectifying and filter elements to carry the rectified current to a load.

14. The versatile dynamo-electric machine (10) according to claim 12, further comprising a concentrated winding positioned in the slots in the stator of the DC generator component, said concentrated winding configured for producing a pattern of north and south magnetic poles in the layer of magnetizable magnetic material as it rotates past the concentrating winding.

15. The versatile dynamo-electric machine (10) according to claim 1 further comprising:
a base (101) upon which said machine housing (106) is mounted;
an engine (114) also on said base, the engine (114) having control means to enable starting of said engine and its acceleration to a desired speed;
a power output shaft (123) on said engine connected to said shaft from said motor generator by a clutch;
an electrical sensor control means (132) functioning when a fault occurs in the source of AC power to energise the engine control means and to activate the clutch (124) so that the engine shaft is operatively coupled to the motor-generator shaft.

16. The versatile dynamo-electric machine (10) according to claim 15 wherein rotational energy created when said motor-generator is operating causes said engine (114) to start and rapidly accelerate to full operating speed when said clutch (124) is activated.

17. The versatile dynamo-electric machine (10) according to claim 15 further comprising a relatively low voltage direct current starter motor and an associated gear unit attached to the engine shaft, said low voltage for said starter motor provided by a voltage step down transformer and a rectifier circuit (115C) operatively connected to the output of the main windings of said motor when there is an interruption in said source of AC power.

18. The versatile dynamo-electric machine (10) according to claim 15 wherein said sensor electrical control means (132) includes timing means that can be set to a selected time period after a disturbance in the source of AC power before it energises the engine controls and activates the clutch (124), whereby the rotational inertia of the rotor can be used to enable AC of the desired voltage and frequency to be delivered continuously and without interruption during this selected time period, while the engine is not started.

19. The versatile dynamo-electric machine (10) of claim 1, wherein both stators (50) and their associated electrical rotors (80) function as dual AC motors when the main windings in each of the stators receive AC from an AC source.

20. The versatile dynamo-electric machine (10) of claim 19, further comprising an electrical circuit connectable to the AC source and to the main windings in each stator, the main windings in each stator producing a rotating magnetic field when so energised with AC power so as to react with the layer of magnetizable magnetic material in the associated rotor to start rotation of the rotor, the electrical circuit including switch means in the portion going to one stator, and means for opening said switch means when the rotor is being started from stand-still.

21. The versatile dynamo-electric machine (10) of claim 20 wherein said switch means is configured so that only a single stator receives AC from the source when the machine is being started so that very low inrush starting current flows into the machine and the rotor accelerates until it reaches over about 75% of its normal full speed whereupon the switch means in the circuit closes and AC power from the source is supplied to the other stator also.

22. The versatile dynamo-electric machine (10) of claim 21, wherein single-phase AC is supplied to the concentrated windings in both stators (50, 50A) when the rotor reaches about 85% to 90% of full speed, so that the concentrated windings will magnetize that layer of re-magnetizable permanent magnetic material (82) in both rotor elements into a pattern of both north and south magnetic poles which will strongly react with the rotating magnetic fields in both stators so that the rotor (80) will accelerate rapidly to synchronous speed.

23. The versatile dynamo-electric machine (10) of claim 22, wherein the AC supply to the concentrated windings is disconnected when said rotor (80) reaches synchronous speed.

24. The dynamo-electric machine (10) of claim 1 wherein both pairs of stators (50, 50A) and their associated rotors (80) function as AC motors, the main windings of both stators (50, 50A) are each wound for application thereto of from 50% to 70% of line voltage form the sources of AC power, and are connected in series, and means are provided for changing the phase of the single-phase AC in the concentrated windings relative to the phase of the single-phase AC going to the concentrated windings in the other stator, whereby to change the back electro-motive-force generated by the series stator windings and hence the input power factor of the motor when operating at full speed.

25. The dynamo-electric machine (10) of claim 1, wherein the first stator is connected to a source of AC power and the second stator is connected to a load.

26. The dynamo-electric machine (10) of claim 25, further comprising a switch interposed in the circuit to the leads to the main windings of the first stator, and means provided for operating the switch quickly after usable AC from the AC power source is lost, to interrupt the circuit from the AC source when it is so malfunctioning, and leads provided from the first stator being connected to an electrical circuit capable of furnishing AC power to the lighting and auxiliary electrical equipment, which may be adjacent to the dynamo-electric machine (10) so that they will keep functioning, concurrently with AC power being continuously supplied to the load by the second stator.

27. The dynamo-electric machine (10) of claim 1 wherein both pairs of stator and their associated rotors are operating as motors, and the main windings of the stators are connected in series.

28. The dynamo-electric machine (10) of claim 27 wherein the concentrated windings on the stators (50) are each in an electrical circuit connected to a means for shifting the phase of the single-phase AC of one concentrated winding relative to the phase of the AC in the second concentrated winding, thereby modifying the input power factor of the dynamo-electric machine.

29. The versatile dynamo-electric machine (10) of claim 1, wherein both stators and their associated electrical rotors function as AC motors when the main windings of each of their stators receive AC from an AC source, each main winding configured to operate on a voltage equal to 60% to 70% of the source voltage when the main windings are connected in series, and further comprising:
an electrical circuit connectable to the AC source and to the main windings in each stator, the main windings when energised with AC producing a rotating magnetic field in each stator which will react with the layer of magnetizable magnetic material in its associated rotor to cause rotation of the rotor, the electrical circuit having means for connecting each of the main windings in one stator in series with the corresponding main windings in the other stator and switch means for connecting these windings to provide a delta connection between the main windings of both stators now in series, whereby to produce a high current flow in the main windings and thereby produce a powerful torque on the rotor and a relatively strong acceleration thereof.

30. The versatile dynamo-electric machine (10) of claim 29 further comprising means in the electrical circuit operable when the rotor speed reaches a predetermined speed to connect the series connected main windings of both stators into a wye connection and when the rotor reaches about 85% to 90% of its synchronous speed to energise the concentrated windings in both stators with single-phase AC of the same frequency as being supplied to the main windings so as to magnetise the layer of re-magnetizable permanent magnetic material on its associated moving rotor into a pattern of north and south magnetic poles that will strongly react with the rotating magnetic field of the main windings to accelerate the rotor to a synchronous speed.

## Patentansprüche

1. Eine vielseitige dynamoelektrische Maschine (10), umfassend:
ein Maschinengehäuse (12) aus massivem Metall mit einer zylindrischen inneren Bohrung (18), welche sich von einem Ende zum anderen erstreckt, und Läuferkappen (20, 20A), welche an jedem Ende des Gehäuses befestigt sind, um ein geschlossenes Gehäuse zu bilden;
zwei ringförmige, als Ringe geformte unabhängige Ständer (50), wobei jeder Ständer ein inneres Ende, das an den Gehäuseläuferkappen befestigt ist und von diesen getragen wird; aufweist, um Wärme von den Ständern zu dem Gehäuse zu leiten, und mit einem entgegengesetzten Ende, das sich nach innen von den Läuferkappen in die zylindrische Bohrung (18) erstreckt, um einen axialen Trennraum dazwischen zu definieren, wobei jeder Ständer eine mittige axiale Öffnung, die sich durch ihn hindurch erstreckt, aufweist;
wobei jeder Ständer (50) eine äußere zylindrische Oberfläche (51) aufweist, die mit der Bohrungsachse koaxial ist und axial angeordnete Schlitze (49), welche in dieser ausgebildet sind, aufweist, wobei jeder Ständer (50) eine elektrische Hauptwicklung (53) aufweist, die in den meisten der Schlitze angeordnet ist, und mindestens einen Kern, welcher mindestens ein Paar benachbarter Schlitze mit einer konzentrierten Wicklung (53C) in dem Paar benachbarter Schlitze aufweist, elektrische Leitungen (54) zu den konzentrierten Wicklungen, welche mit einer Quelle eines einphasigen Wechselstroms durch seine Leitungen verbunden sind, und Leitungen zu den Hauptwicklungen (53), welche für die Verbindung mit mindestens einer Quelle von Wechselstromleistung und einer Last konfiguriert sind, wobei die Hauptwicklungen (53) in den Kernschlitzen (49) so angeordnet sind, daß ein rotierendes Magnetfeld erzeugt wird, wenn sie durch Wechselstrom erregt werden;
eine in der Bohrung und koaxial mit dieser angeordnete Läuferwelle (70), erste und zweite Lager (60, 60A) zum drehbaren Tragen der Läuferwelle, wobei eines der Lager an jeder Läuferkappe (20, 20A) befestigt ist, wobei sich mindestens ein Ende (73) der Welle zu der Außenseite des Gehäuses (12) erstreckt, wobei die Läuferwelle (70) durch die mittige axiale Öffnung der Ständerkerne mit einem Spielraum dazwischen geführt ist; und,
an dem axialen Trennraum zwischen den Ständern, Komponenten mit einem hohen Trägheitsmoment, wobei die Komponenten umfassen:
eine kreisförmige Antriebsplatte (74) aus Metall, welche an der Läuferwelle befestigt ist und sich an dem axialen Trennraum zwischen den Ständern radial nach außen erstreckt;
zwei kreisförmige zylindrische Hülsen (76, 76A), welche um den Außenumfang der Ständer herum ausgebildet sind, wobei eine Hülse mit jeder Seite des Umfangs der Antriebsplatte verbunden ist und einen kleinen Spielraum zwischen der inneren Oberfläche der Bohrung und der äußeren Oberfläche der Hülsen definiert, wobei die Hülsen jeweils zwei unabhängige elektrische Läuferelemente definieren, eines für jeden der Ständer, wobei jeder der Ständer durch die Anordnung aus der kreisförmigen metallischen Antriebsplatte (74), den zylindrischen Hülsen und der Welle von dem anderen Ständer elektrisch und magnetisch isoliert ist, wobei an der inneren Oberfläche jeder Hülse eine ringförmige zylindrische Schicht aus einem Magnetmaterial mit geringer Koerzitivfeldstärke befestigt ist; und
eine Schicht aus wieder-magnetisierbarem Dauermagnetmaterial (82), welche innerhalb jeder der Hülsen gehalten wird und eine freiliegende innerste zylindrische Oberfläche aufweist, die im wesentlichen die gleiche Ausdehnung aufweist wie die äußere zylindrische Oberfläche jeder der Ständer und eng von dieser beabstandet ist,
wodurch einer der oder beide Ständerkerne und sein benachbarter Läufer betreibbar ist als (1) ein Motor, wenn seine Leitungen zu den Hauptwicklungen mit einer Wechselstromleistungsquelle verbunden sind und die Leitungen zu der konzentrierten Wicklung durch einen gesteuerten Schalter mit einer Quelle einphasigen Wechselstroms mit derselben Frequenz wie die Wechselstromleistung verbunden sind, oder (2) als ein Wechselstromgenerator, wenn die Leitungen zu der konzentrierten Wicklung hiervon durch einen gesteuerten Schalter mit einem einphasigen Wechselstrom mit der Frequenz, welche für eine von dem Generator abgegebene Wechselstromleistung erwünscht ist, verbunden sind und die Welle gedreht wird; und (3) können beide Ständer und ihre benachbarten Läufer gleichzeitig betrieben werden, wobei ein Ständer als ein Motor und der andere Ständer als ein Wechselstromgenerator angeschlossen ist.

2. Die vielseitige dynamoelektrische Maschine (10) aus Anspruch 1, wobei die Ständer (50) und benachbarten Läufer (80) als ein Wechselstrommotor betreibbar sind, wenn die Leitungen (54) zu den Hauptwicklungen mit einer Quelle von Wechselstromleistung verbunden sind, um ein rotierendes Magnetfeld in dem Ständer zu erzeugen, die Leitungen zu der konzentrierten Wicklung mit einer Quelle einphasigen Wechselstroms mit derselben Frequenz wie die Wechselstromleistung, und die Quelle einphasigen Wechselstroms eine ausreichende Größe aufweist, um die Schicht (82) aus wieder-magnetisierbarem dauermagnetischem Material in abwechselnde und aufeinanderfolgende Nord- und Süd-Magnetfelder zu magnetisieren.

3. Die vielseitige dynamoelektrische Maschine (10) aus Anspruch 2, wobei die Magnetpole mit den rotierenden Magnetfeldern in dem benachbarten Ständer (50) so wechselwirken, daß der Motor, ausgehend von unter der Synchrongeschwindigkeit der Rotation liegenden Geschwindigkeiten, rasch Synchrongeschwindigkeit erreicht und aufrechterhält

4. Die vielseitige dynamoelektrische Maschine (10) aus Anspruch 1, wobei die Ständer (50) und benachbarten Läufer (80) als ein Wechselstromgenerator betreibbar sind, wenn die Leitungen (54) zu den konzentrierten Wicklungen mit einer Quelle einphasigen Wechselstroms mit derselben Frequenz, die für eine Last erwünscht ist, verbunden sind und die Quelle einphasigen Wechselstroms eine ausreichende Größe aufweist, um die Schicht (82) aus wieder-magnetisierbarem dauermagnetischem Material in abwechselnde und aufeinanderfolgende Nord- und Süd-Magnetfelder zu magnetisieren.

5. Die vielseitige dynamoelektrische Maschine (10) aus Anspruch 4, wobei die Rotation des Läufers (80) ein Wechselstrompotential in den elektrischen Hauptwicklungen (53) in dem Ständer (50) erzeugt, welches dieselbe Frequenz wie in den Erregerwicklungen aufweist, und das Wechselstrompotential wird zu den Leitungen von diesen Hauptwicklungen zu der Last geführt.

6. Die vielseitige dynamoelektrische Maschine (10) aus Anspruch 1, wobei die Ständerkerne (50A, 50B) und benachbarte Läufer (80) als ein Motor-Generator betreibbar sind, wenn ein Ständer-Läufer-Paar als ein Wechselstrommotor zum Antreiben des Läufers (80) des anderen Ständer-Läufer-Paars für den Betrieb als ein Wechselstromgenerator betrieben wird.

7. Die vielseitige dynamoelektrische Maschine (10) aus Anspruch 6, wobei das Trägheitsmoment der Läuferanordnung das Wechselstromgeneratorpaar dazu befähigt, einen Wechselstrom mit gewünschter Frequenz für eine Last über einen längeren Zeitraum zu erzeugen, wenn die externe Wechselstromleistung zu dem als ein Wechselstrommotor betriebenen Ständer-Läufer-Paar unterbrochen wird.

8. Die vielseitige dynamoelektrische Maschine (10) aus Anspruch 1, wobei mindestens einer der Ständer (50) und sein benachbarter Läufer (80) konfiguriert sind, um als ein Wechselstromgenerator zu arbeiten, und die Schlitze (49) in jedem der Ständer (50) sind axial ausgerichtet und die Hauptwicklung (53) für jeden der Ständer ist dieselbe, und die Hauptwicklungen sind durch Schlitze beider Ständerteile geführt.

9. Die vielseitige dynamoelektrische Maschine (10) aus Anspruch 8, wobei separate konzentrierte Wicklungen (53C) für jeden der Ständer vorgesehen sind, so daß unterschiedliche Wechselströme gleichzeitig durch jede konzentrierte Wicklung geleitet werden können.

10. Die vielseitige dynamoelektrische Maschine (10) aus Anspruch 1, welche ferner eine Gleichstromgeneratorkomponente umfaßt, welche an einem Ende der drehbaren Welle (70), die über eine Stirnwand des Gehäuses (12) hinaus vorsteht, vorgesehen ist.

11. Die vielseitige dynamoelektrische Maschine (10) aus Anspruch 10, wobei die Gleichstromgeneratorkomponente eine relativ große kreisförmige Platte (154), welche mit der Welle drehbar ist und an deren Umfang eine kreisförmige, zylindrische Hülle (156) aus einem Magnetmaterial mit geringer Koerzitivfeldstärke befestigt ist, welche koaxial mit der Welle ist und sich nach innen zu dieser hin erstreckt, und eine an der Innenwand der Hülle befestigte Schicht (158) aus wieder-magnetisierbarem Dauermagnetmaterial umfaßt, wobei die Schicht eine freiliegende, kreisförmige, zylindrische Oberfläche, welche mit der Welle koaxial ist, aufweist, wobei die zylindrische Hülle und die befestigte Schicht aus Magnetmaterial den Läufer des Gleichstromgenerators bilden.

12. Die vielseitige dynamoelektrische Maschine (10) aus Anspruch 11, wobei die Gleichstromgeneratorkomponente ferner einen Ständer umfaßt, welcher mit dem Läufer des Gleichstromgenerators magnetisch zusammenwirkt, wobei der Ständer eine kreisförmige zylindrische Hülle (160) mit kleinerem Durchmesser umfaßt, welche mit der Stirnwand des Maschinengehäuses fest verbunden ist und zu der Hülle hin bis zu einem Punkt kurz vor der kreisförmigen Platte vorsteht, wobei die äußere zylindrische Oberfläche der kleineren Hülle einen fest mit dieser verbundenen geschlitzten Ständerkern (162) mit einer zylindrischen Form aufweist, welcher sich fast bis zu der Schicht aus magnetisierbarem Material auf dem Läufer hin erstreckt und im wesentlichen die gleiche Ausdehnung wie diese aufweist, mit einem Rotationsspielraum dazwischen, und elektrischen Wicklungen, welche in Schlitzen auf der äußeren Oberfläche des Ständerkerns so angeordnet sind, daß sie eine Wechselstromspannung erzeugen, wenn die Schicht aus magnetisiertem dauermagnetischem Material auf dem Läufer um den Ständer dreht.

13. Die vielseitige dynamoelektrische Maschine (10) gemäß Anspruch 12, welche ferner elektrische Gleichrichtermittel (167) und elektrische Filterelemente (171), Leitungen (165), welche von den Ständerwicklungen zu den Gleichrichter- und Filterelementen vorgesehen sind, um das Erzeugen eines gleichgerichteten Gleichstroms zu ermöglichen, und elektrische Leitungen (170) von den Gleichrichter- und Filterelementen, um den gleichgerichteten Strom zu einer Last zu führen.

14. Die vielseitige dynamoelektrische Maschine (10) gemäß Anspruch 12, welche ferner eine konzentrierte Wicklung umfaßt, welche in den Schlitzen in dem Ständer der Gleichstromgeneratorkomponente angeordnet ist, wobei die konzentrierte Wicklung konfiguriert ist, um ein Muster aus Nord- und Südmagnetpolen in der Schicht aus magnetisierbarem Magnetmaterial zu erzeugen, wenn diese an der konzentrierten Wicklung vorbei rotiert.

15. Die vielseitige dynamoelektrische Maschine (10) gemäß Anspruch 1, welche ferner umfaßt:
eine Basis (101), auf welcher das Maschinengehäuse (106) montiert ist;
eine Antriebsmaschine (114), ebenfalls auf der Basis, wobei die Antriebsmaschine (114) Steuermittel aufweist, um das Starten der Antriebsmaschine und ihre Beschleunigung auf eine gewünschte Geschwindigkeit zu ermöglichen;
eine Leistungsabgabewelle (123) an der Antriebsmaschine, welche mit der Welle von dem Motorgenerator mittels einer Kupplung verbunden ist;
ein elektrisches Sensorsteuermittel, welches so wirkt, daß es beim Auftreten einer Störung in der Wechselstromeistungsquelle das Antriebsmaschinensteuermittel mit Energie versorgt und die Kupplung (124) aktiviert, so daß die Antriebsmaschinenwelle für den Betrieb mit der Motorgeneratorwelle verbunden ist.

16. Die vielseitige dynamoelektrische Maschine (10) gemäß Anspruch 15, wobei Rotationsenergie, welche beim Betrieb des Motorgenerators erzeugt wird, bewirkt, daß die Antriebsmaschine (114) anläuft und rasch auf volle Betriebsgeschwindigkeit beschleunigt, wenn die Kupplung (124) aktiviert wird.

17. Die vielseitige dynamoelektrische Maschine (10) gemäß Anspruch 15, welche ferner einen Gleichstromstartermotor mit relativ niedriger Spannung und eine assoziierte Getriebeeinheit, die an der Antriebsmaschinenwelle befestigt ist, umfaßt, wobei die niedrige Spannung für den Startermotor von einem Spannungsabwärtstransformator und einer Gleichrichterschaltung (115C), welche für den Betrieb mit dem Ausgang der Hauptwicklungen des Motors verbunden sind, geliefert wird, wenn eine Unterbrechung in der Wechselstromleistungsquelle auftritt.

18. Die vielseitige dynamoelektrische Maschine (10) gemäß Anspruch 15, wobei das elektrische Sensorsteuermittel (132) ein Zeitgebermittel umfaßt, welches auf einen ausgewählten Zeitraum nach einer Störung in der Wechselstromleistungsquelle eingestellt werden kann, bevor es die Antriebsmaschinensteuerung mit Energie versorgt und die Kupplung (124) aktiviert, wodurch das Trägheitsmoment des Läufers genutzt werden kann, um zu ermöglichen, daß Wechselstrom mit der gewünschten Spannung und Frequenz kontinuierlich und ohne Unterbrechung während dieses gewählten Zeitraums geliefert wird, während die Antriebsmaschine nicht in Gang gesetzt ist.

19. Die vielseitige dynamoelektrische Maschine (10) von Anspruch 1, wobei beide Ständer (50) und ihre assoziierten elektrischen Läufer (80) als duale Wechselstrommotoren arbeiten, wenn die Hauptwicklungen in jedem der Ständer Wechselstrom von einer Wechselstromquelle erhalten.

20. Die vielseitige dynamoelektrische Maschine (10) von Anspruch 19, welche ferner eine elektrische Schaltung, welche mit der Wechselstromquelle und den Hauptwicklungen in jedem Ständer verbunden werden kann, wobei die Hauptwicklungen in jedem Ständer ein rotierendes Magnetfeld erzeugen, wenn sie so mit Wechselstromleistung erregt werden, daß sie mit der Schicht aus magnetisierbarem Magnetmaterial in dem assoziierten Läufer wechselwirkten, um die Rotation des Läufers in Gang zu setzen, wobei die elektrische Schaltung Schaltermittel in dem zu einem Ständer führenden Bereich aufweist, und Mittel zum Öffnen der Schaltermittel, wenn der Läufer aus dem Stillstand in Gang gesetzt wird, umfaßt.

21. Die vielseitige dynamoelektrische Maschine (10) von Anspruch 20, wobei das Schaltermittel so konfiguriert ist, daß nur ein einziger Ständer Wechselstrom von der Quelle erhält, wenn die Maschine in Gang gesetzt wird, so daß ein sehr geringer Einschaltanfangsstrom in die Maschine fließt und der Läufer beschleunigt, bis er mehr als ungefähr 75 % seiner normalen Höchstgeschwindigkeit erreicht, woraufhin das Schaltermittel in der Schaltung schließt und Wechselstromleistung von der Quelle auch zu dem anderen Ständer geliefert wird.

22. Die vielseitige dynamoelektrische Maschine (10) von Anspruch 21, wobei einphasiger Wechselstrom zu den konzentrierten Wicklungen in beiden Ständern (50, 50A) geführt wird, wenn der Läufer ungefähr 85 % bis 90 % der Höchstgeschwindigkeit erreicht, so daß die konzentrierten Wicklungen jene Schicht aus wieder-magnetisierbarem Dauermagnetmaterial (82) in beiden Läuferelementen zu einem Muster aus sowohl Nord- als auch Süd-Magnetpolen magnetisiert, welches stark mit den rotierenden Magnetfeldern in beiden Ständern wechselwirkt, so daß der Läufer (80) rasch auf Synchrongeschwindigkeit beschleunigt.

23. Die vielseitige dynamoelektrische Maschine (10) von Anspruch 22, wobei die Wechselstromzufuhr zu den konzentrierten Wicklungen abgeschaltet wird, wenn der Läufer (80) Synchrongeschwindigkeit erreicht.

24. Die dynamoelektrische Maschine (10) von Anspruch 1, wobei beide Ständerpaare (50, 50A) und ihre assoziierten Läufer (80) als Wechselstrommotoren arbeiten, wobei die Hauptwicklungen beider Ständer (50, 50A) jeweils für eine Beaufschlagung mit einer 50 %igen bis 70 %igen Netzspannung von den Quellen von Wechselstromleistung hierauf gewickelt und in Serie geschaltet sind, und Mittel zum Ändern der Phase des einphasigen Wechselstroms in den konzentrierten Wicklungen relativ zu der Phase des einphasigen Wechselstroms, der zu den konzentrierten Wicklungen in dem anderen Ständer geleitet wird, sind vorgesehen, wodurch die durch die in Serie geschalteten Ständerwicklungen erzeugte gegenelektromotorische Kraft und daher der Eingangsleistungsfaktor des Motors verändert werden, wenn dieser bei Höchstgeschwindigkeit arbeitet.

25. Die dynamoelektrische Maschine (10) von Anspruch 1, wobei der erste Ständer mit einer Quelle von Wechselstromleistung verbunden ist und der zweite Ständer mit einer Last verbunden ist.

26. Die dynamoelektrische Maschine (10) von Anspruch 25, welche ferner einen Schalter, welcher in der Schaltung zu den Leitungen zu den Hauptwicklungen des ersten Ständers zwischengeschaltet ist, und Mittel, welche zum schnellen Betätigen des Schalters nach dem Verlust nutzbaren Wechselstroms von der Wechselstromleistungsquelle vorgesehen sind, um die Schaltung von der Wechselstromquelle, wenn sie fehlerhaft funktioniert, zu unterbrechen, und Leitungen umfaßt, die von von dem ersten Ständer vorgesehen sind, welcher mit einer elektrischen Schaltung mit der Fähigkeit, die Beleuchtung und zusätzliche elektrische Geräte, die zu der dynamoelektrischen Maschine (10) benachbart sind, mit Wechselstromleistung zu versorgen, so daß sie weiterhin funktionieren, während gleichzeitig die Last durch den zweiten Ständer kontinuierlich mit Wechselstromleistung versorgt wird.

27. Die dynamoelektrische Maschine (10) von Anspruch 1, wobei beide Ständerpaare und ihre assoziierten Läufer als Motoren arbeiten und die Hauptwicklungen der Ständer in Serie geschaltet sind.

28. Die dynamoelektrische Maschine (10) von Anspruch 27, wobei die konzentrierten Wicklungen auf den Ständern (50) jeweils in einer elektrischen Schaltung angeordnet sind, welche mit einem Mittel zum Verschieben der Phase des einphasigen Wechselstroms einer konzentrierten Wicklung relativ zu der Phase des Wechselstroms in der zweiten konzentrierten Wicklung verbunden ist, wodurch der Eingangsleistungsfaktor der dynamoelektrischen Maschine modifiziert wird.

29. Die vielseitige dynamoelektrische Maschine (10) von Anspruch 1, wobei beide Ständer und ihre assoziierten elektrischen Läufer als Wechselstrommotoren arbeiten, wenn die Hauptwicklungen jedes ihrer Ständer Wechselstrom von einer Wechselstromquelle erhalten, wobei jede Hauptwicklung so konfiguriert ist, daß sie bei einer Spannung gleich 60 % bis 70 % der Quellenspannung arbeitet, wenn die Hauptwicklungen in Serie geschaltet sind, und ferner umfassend:
eine elektrische Schaltung, welche mit der Wechselstromquelle und mit den Hauptwicklungen in jedem Ständer verbindbar ist, wobei die Hauptwicklungen, wenn sie mit Wechselstrom erregt werden, ein rotierendes Magnetfeld in jedem Ständer erzeugen, das mit der Schicht aus magnetisierbarem Magnetmaterial in seinem assoziierten Läufer reagiert, um eine Rotation des Läufers zu bewirken, wobei die elektrische Schaltung Mittel zum Verbinden jeder der Hauptwicklungen in einem Ständer in Serie mit den entsprechenden Hauptwicklungen in dem anderen Ständer und Schaltermittel zum Verbinden dieser Wicklungen, um eine Dreieckschaltung zwischen den Hauptwicklungen beider nun in Serie geschalteter Ständer zu bilden, aufweist, wodurch ein hoher Stromfluß in den Hauptwicklungen erzeugt wird und dadurch ein starkes auf den Läufer einwirkendes Drehmoment und eine relativ starke Beschleunigung desselben erzeugt wird.

30. Die vielseitige dynamoelektrische Maschine (10) von Anspruch 29, welche ferner Mittel in der elektrischen Schaltung umfaßt, welche betätigbar sind, wenn die Läufergeschwindigkeit eine vorher bestimmte Geschwindigkeit erreicht, um die in Serie geschalteten Hauptwicklungen beider Ständer in einer Sternschaltung zu verbinden, und um, wenn der Läufer ungefähr 85 % bis 90 % seiner Synchrongeschwindigkeit erreicht, die konzentrierten Wicklungen in beiden Ständern mit einphasigem Wechselstrom derselben Frequenz wie der den Hauptwicklungen zugeführte Wechselstrom zu erregen, um die Schicht aus wiederu magnetisierbarem Dauermagnetmaterial auf seinem assoziierten, sich bewegenden Läufer zu einem Muster aus Nord- und Süd-Magnetpolen zu magnetisieren, welches mit dem rotierenden Magnetfeld der Hauptwicklungen stark reagiert, um den Motor auf eine Synchrongeschwindigkeit zu beschleunigen.

## Revendications

1. Machine dynamoélectrique (10) à applications multiples, comprenant :
un carter (12) de machine de métal plein, ayant un trou cylindrique interne (18) s'étendant d'une première extrémité à l'autre et des cloches (20, 20A) d'extrémité fixées à chaque extrémité du carter pour la formation d'un boîtier fermé,
deux stators indépendants (50) de forme annulaire, chaque stator ayant une première extrémité interne fixée aux cloches d'extrémité du carter et supportée par celles-ci pour le transfert de chaleur des stators au carter, et ayant une extrémité opposée s'étendant vers l'intérieur depuis les cloches d'extrémité dans le trou cylindrique (18) pour la délimitation d'un espace intermédiaire de séparation axiale, chaque stator ayant un orifice axial central qui le traverse,
chaque stator (50) ayant une surface cylindrique externe (51) coaxiale à l'axe du trou et ayant des fentes disposées axialement (49) et formées sur lui, chaque stator (50) ayant un bobinage électrique principal (53) placé dans la plupart des fentes et au moins un noyau contenant au moins une paire de fentes adjacentes avec un bobinage concentre (53C) dans la paire de fentes adjacentes, des fils électriques (54) rejoignant les bobines concentrés connectés à une source de courant alternatif monophasé par ces fils, et des fils rejoignant les bobinages principaux (53) et ayant une configuration permettant la connexion à au moins une source d'alimentation alternative ou une charge, les bobinages principaux (53) étant placés dans les fentes du noyau (49) pour la production d'un champ magnétique tournant lors d'une excitation par un courant alternatif,
un arbre (70) de rotor disposé à l'intérieur du trou et coaxialement à celui-ci, un premier et un second palier (60, 60A) destinés à supporter l'arbre de rotor afin qu'il tourne, chaque palier étant fixé à l'une des cloches d'extrémité (20, 20A) avec au moins une extrémité (73) de l'arbre qui s'étend à l'extérieur du carter (12), l'arbre de rotation (70) passant par l'orifice axial central des noyaux de stator avec un espace intermédiaire de dégagement, et
dans l'espace de séparation axiale des stators, des éléments ayant une inertie élevée en rotation, ces éléments comprenant :
une plaque métallique circulaire d'entraînement (74) fixée à l'arbre du rotor et s'étendant radialement à l'extérieur de l'espace de séparation axiale entre les stators,
deux manchons cylindriques circulaires (76, 76A) formés autour de la périphérie externe des stators, un premier manchon étant fixé de chaque côté de la périphérie de la plaque d'entraînement et délimitant un petit espace de dégagement entre la surface interne du trou et la surface externe des manchons, les manchons délimitant respectivement deux éléments électriques indépendants de rotor, un pour chacun des stators, chacun des stators étant isolé électriquement et magnétiquement de l'autre stator par l'ensemble de la plaque métallique circulaire d'entraînement (74), des manchons cylindriques et de l'arbre, la surface interne de chaque manchon ayant sous forme fixée une couche cylindrique annulaire d'un matériau magnétique de faible champ coercitif, et
une couche d'un matériau magnétique permanent réaimantable (82) supportée dans chacun des manchons et ayant une surface cylindrique la plus interne exposée ayant pratiquement la même étendue que la surface cylindrique externe de chacun des stators et placée à une faible distance de cette surface,
si bien que l'un au moins des noyaux de stator et son rotor adjacent sont destinés à fonctionner (1) en moteur lorsque les fils rejoignant les bobinages principaux sont connectés à une source d'énergie alternative et les fils rejoignant le bobinage concentré sont connectés par un commutateur commandé à une source d'un courant alternatif monophasé de même fréquence que l'alimentation alternative, ou (2) en génératrice de courant alternatif lorsque les fils du bobinage concentré sont connectés par un commutateur commandé à un courant alternatif monophasé de fréquence voulue pour la puissance alternative de sortie de la génératrice, et l'arbre est entraîné en rotation, et (3) alors que les deux stators et les rotors adjacents fonctionnent simultanément, un premier stator étant connecté en moteur et l'autre en génératrice alternative.

2. Machine dynamoélectrique (10) à applications multiples selon la revendication 1, dans laquelle les stators (50) et les rotors adjacents (80) sont destinés à fonctionner en moteur alternatif lorsque les fils (54) rejoignant les bobinages principaux sont connectés à une source de courant alternatif pour la production d'un champ magnétique tournant dans le stator, les fils rejoignant le bobinage concentré sont connectés à une source de courant alternatif monophasé de même fréquence que l'alimentation alternative, et la source de courant alternatif monophasé a une intensité suffisante pour que la couche du matériau magnétique permanent réaimantable (82) soit aimantée avec des champs magnétiques Nord et Sud qui alternent et successifs.

3. Machine dynamoélectrique (10) à applications multiples selon la revendication 2, dans laquelle les pôles magnétiques réagissent avec les champs magnétiques tournant dans le stator adjacent (50) pour provoquer la mise rapide du moteur à une vitesse synchrone et son maintien à cette vitesse depuis des vitesses inférieures à la vitesse synchrone de rotation.

4. Machine dynamoélectrique (10) à applications multiples selon la revendication 1, dans laquelle les stators (50) et les rotors adjacents (80) sont destinés à fonctionner en génératrices alternatives lorsque les fils (54) rejoignant les bobinages concentres sont connectés à une source de courant alternatif monophasé à la même fréquence voulue pour une charge, et la source de courant alternatif monophasé a une intensité suffisante pour aimanter la couche du matériau magnétique permanent réaimantable (82) dans des champs magnétiques Nord et Sud qui alternent et se succèdent.

5. Machine dynamoélectrique (10) à applications multiples selon la revendication 4, dans laquelle la rotation du rotor (80) produit un potentiel alternatif dans les bobinages électriques principaux (53) dans le stator (50) avec la même fréquence que les bobinages d'excitation, et le potentiel alternatif est transporté vers les fils depuis ces bobinages vers la charge.

6. Machine dynamoélectrique (10) à applications multiples selon la revendication 1, dans laquelle les noyaux de stator (50A, 50B) et les rotors adjacents (80) sont destinés à fonctionner en moteur-génératrice lorsqu'une première paire stator-rotor fonctionne en moteur en courant alternatif pour l'entraînement du rotor (80) de l'autre paire stator-rotor destinée à fonctionner en génératrice de courant alternatif.

7. Machine dynamoélectrique (10) à applications multiples selon la revendication 6, dans laquelle l'inertie en rotation de l'ensemble du rotor permet à la paire de génératrices en courant alternatif de créer un courant alternatif de fréquence voulue pendant une période prolongée pour une charge lorsque de l'énergie alternative externe transmise à la paire stator-rotor fonctionne dans le moteur alternatif est interrompue.

8. Machine dynamoélectrique (10) à applications multiples selon la revendication 1, dans laquelle l'un au moins des stators (50) et le rotor adjacent (80) ont une configuration permettant le fonctionnement en génératrice de courant alternatif, et les fentes (49) de chacun des stators (50) sont alignées axialement et le bobinage principal (53) de chacun des stators est le même, et les bobinages principaux passent dans les fentes des deux tronçons de stator.

9. Machine dynamoélectrique (10) à applications multiples selon la revendication 8, dans laquelle des bobinages concentrés séparés (53C) sont disposés pour chacun des stators afin que les courants alternatifs distincts puissent circuler simultanément dans chacun des bobinages concentrés.

10. Machine dynamoélectrique (10) à applications multiples selon la revendication 1, comprenant en outre un élément de génératrice de courant continu placé à une première extrémité de l'arbre rotatif (70) dépassant au-delà d'une paroi d'extrémité du carter (12).

11. Machine dynamoélectrique (10) à applications multiples selon la revendication la, dans laquelle l'élément formant génératrice de courant continu est constitue d'une plaque circulaire relativement grande (154) qui peut tourner avec l'arbre et à la périphérie de laquelle est fixée une enveloppe cylindrique circulaire (156) d'un matériau magnétique de faible champ coercitif coaxial et s'étendant vers l'intérieur vers l'arbre, et d'une couche d'un matériau magnétique permanent réaimantable (158) fixé à la paroi interne de l'enveloppe, la couche ayant une surface cylindrique circulaire exposée coaxiale à l'arbre, la plaque circulaire, l'enveloppe cylindrique et la couche de matériau magnétique fixé formant ensemble le rotor de la génératrice de courant continu.

12. Machine dynamoélectrique (10) à applications multiples selon la revendication 11, dans laquelle l'élément générateur de courant continu comprend en outre un stator qui coopère magnétiquement avec le rotor de la génératrice de courant continu, le stator ayant une enveloppe cylindrique circulaire (160) de petit diamètre fermement fixée à la paroi d'extrémité du carter de la machine et dépassant vers l'enveloppe en un point qui est à une faible distance de la plaque circulaire, la surface cylindrique externe destinée à l'enveloppe plus petite ayant un noyau de stator (162) qui lui est fermement fixé, qui a des fentes et qui a une forme cylindrique, s'étendant presque vers une couche de matériau aimantable et ayant pratiquement la même étendue sur le rotor avec un espace de dégagement en rotation intermédiaire, et des bobinages électriques placés dans les fentes de la surface externe du noyau de stator pour la production d'une tension alternative lorsque la couche du matériau magnétique permanent aimanté sur le rotor tourne autour du stator.

13. Machine dynamoélectrique (10) à applications multiples selon la revendication 12, comprenant en outre des éléments de redressement de courant électrique (167) et des éléments de filtrage électrique (171), des fils (165) allant des bobinages de stator vers les éléments de redressement et de filtrage pour permettre la production d'un courant continu redressé, et des fils électriques (170) allant des éléments de redressement et de filtrage vers une charge pour transmettre le courant redressé.

14. Machine dynamoélectrique (10) à applications multiples selon la revendication 12, comprenant en outre un bobinage concentré placé dans les fentes du stator de l'élément générateur de courant continu, le bobinage concentré ayant une configuration destinée à produire un motif de pôles magnétiques Nord et Sud dans la couche du matériau magnétique aimantable lorsqu'elle tourne en face du bobinage concentré.

15. Machine dynamoélectrique (10) à applications multiples selon la revendication, 1, comprenant en outre :
une base (101) sur laquelle est monté le boîtier (106) de la machine,
un moteur à combustion interne (114) placé aussi sur la base, le moteur (114) ayant un dispositif de commande destiné à permettre le démarrage du moteur à combustion interne et son accélération à une vitesse voulue,
un arbre (123) de sortie de puissance placé sur le moteur et raccordé à l'arbre depuis la génératrice à moteur par un embrayage,
un dispositif de commande à capteur électrique (132) qui fonctionne lorsqu'une panne se produit dans la source de courant alternatif pour l'alimentation du dispositif de commande de moteur et pour l'activation de l'embrayage (124) afin que l'arbre du moteur soit couplé pendant le fonctionnement à l'arbre du moteur-génératrice.

16. Machine dynamoélectrique (10) à applications multiples selon la revendication 15, dans laquelle l'énergie de rotation créée lorsque le moteur-génératrice fonctionne provoque le démarrage du moteur à combustion interne (114) et son accélération rapide à pleine vitesse de fonctionnement lorsque l'embrayage (124) est activé.

17. Machine dynamoélectrique (10) a applications multiples selon la revendication 15, comprenant en outre un starter à courant continu de tension relativement basse et une unité associée à engrenage fixés à l'arbre du moteur à combustion interne, la basse tension du starter étant transmise par un transformateur abaisseur de tension et un circuit de redressement (115C) raccordé pendant le fonctionnement à la sortie des bobinages principaux du moteur lorsqu'il existe une interruption de la source d'énergie alternative.

18. Machine dynamoélectrique (10) à applications multiples selon la revendication 16, dans laquelle le dispositif de commande électrique à capteur (132) comporte un dispositif de synchronisation qui peut être réglé a une période choisie après une perturbation de la source d'énergie alternative avant l'excitation des organes de commande du moteur à combustion interne et l'activation de l'embrayage (124), si bien que l'inertie en rotation du rotor peut être utilisée pour permettre la transmission continue et sans interruption d'un courant alternatif de tension et fréquence voulues pendant la période choisie, alors que le moteur à combustion interne n'a pas démarré.

19. Machine dynamoélectrique (10) à applications multiples selon la revendication 1, dans laquelle les deux stators (50) et les rotors électriques associés (80) jouent le rôle de moteur double en courant alternatif lorsque les bobinages principaux de chacun des stators reçoivent un courant alternatif d'une source de courant alternatif.

20. Machine dynamoélectrique (10) à applications multiples selon la revendication 19, comprenant en outre un circuit électrique destiné à être connecté à une source de courant alternatif et aux bobinages principaux de chaque stator, les bobinages principaux de chaque stator produisant un champ magnétique tournant lors d'une excitation par de l'énergie alternative afin qu'ils réagissent avec la couche du matériau magnétique aimantable dans le rotor associé pour lancer la rotation du rotor, le circuit électrique comprenant un dispositif à commutateur dans la partie rejoignant un stator, et un dispositif destiné à ouvrir le dispositif à commutateur lorsque le rotor démarre depuis l'arrêt.

21. Machine dynamoélectrique (10) à applications multiples selon la revendication 20, dans laquelle le dispositif de commutation a une configuration telle qu'un seul stator reçoit un courant alternatif de la source lorsque la machine est en cours de démarrage si bien qu'un très petit courant d'appel de démarrage circule dans la machine et le rotor accélère jusqu'à ce qu'il atteigne plus de 75 % environ de sa vitesse normale à pleine charge, puis le dispositif à commutateur du circuit se ferme et l'énergie en courant alternatif de la source est transmise aussi à l'autre stator.

22. Machine dynamoélectrique (10) à applications multiples selon la revendication 21, dans laquelle de l'énergie alternative monophasée est transmise aux bobinages concentrés des deux stators (50, 50A) lorsque le rotor atteint environ 85 à 90 % de sa vitesse maximale, si bien que le bobinage concentré aimante la couche du matériau magnétique permanent réaimantable (82) des deux éléments de rotor avec un motif de pôles magnétiques Nord et Sud qui réagit fortement avec les champs magnétiques tournant dans les deux stators si bien que le rotor (80) accélère rapidement à sa vitesse synchrone.

23. Machine dynamoélectrique (10) à applications multiples selon la revendication 22, dans laquelle l'alimentation en courant alternatif des bobinages concentrés est déconnectée lorsque le rotor (80) atteint la vitesse synchrone.

24. Machine dynamoélectrique (10) à applications multiples selon la revendication 1, dans laquelle les paires de stator (50, 50A) et les rotors associés (80) fonctionnent en moteur alternatif, les bobinages principaux des deux stators (50, 50A) sont bobinés chacun pour l'application de 50 à 70 % de la tension du réseau provenant des sources d'alimentation alternative et sont connectés en série, et un dispositif est destiné à changer la phase du courant alternatif monophasé dans les bobinages concentrés par rapport à la phase du courant alternatif monophasé transmis aux bobinages concentrés de l'autre stator, si bien que la force contre-électromotrice créée par les bobinages de stator en série est modifiée et le facteur de puissance d'entrée du moteur est donc modifié lors du fonctionnement à pleine vitesse.

25. Machine dynamoélectrique (10) à applications multiples selon la revendication 1, dans laquelle le premier stator est connecté à une source d'énergie en courant alternatif et le second stator est connecté à une charge.

26. Machine dynamoélectrique (10) à applications multiples selon la revendication 25, comprenant en outre un commutateur placé dans le circuit rejoignant les fils des bobinages principaux du premier stator, et un dispositif destiné à commander rapidement le commutateur après la perte d'énergie alternative utilisable depuis la source d'énergie alternative afin que le circuit partant de la source de courant alternatif soit interrompu dans le cas d'une telle panne, et des fils partant du premier stator sont connectés à un circuit électrique qui peut transmettre de l'énergie alternative à un appareillage électrique d'éclairage et auxiliaire qui peut être adjacent à la machine dynamoélectrique (10) afin qu'il reste en fonctionnement, en même temps que de l'énergie en courant alternatif est transmise de façon continue à la charge par le second stator.

27. Machine dynamoélectrique (10) à applications multiples selon la revendication 1, dans laquelle les deux paires de stator et les rotors associés fonctionnent en moteur, et les bobinages principaux des stators sont connectés en série.

28. Machine dynamoélectrique (10) à applications multiples selon la revendication 27, dans laquelle les bobinages concentrée placés sur les stators (50) sont placés chacun dans un circuit électrique connecté à un dispositif de déphasage du courant alternatif monophasé d'un bobinage concentré par rapport à la phase de courant alternatif du second bobinage concentré, si bien que le facteur de puissance à l'entrée de la machine dynamoélectrique est modifié.

29. Machine dynamoélectrique (10) à applications multiples selon la revendication 1, dans laquelle les deux stators et les rotors électriques associée jouent le rôle de moteurs en courant alternatif lorsque les bobinages principaux de chacun des stators reçoivent un courant alternatif d'une source de courant alternatif, chaque bobinage principal ayant une configuration lui permettant de travailler à une tension comprise entre 60 et 70 % de la tension de l'alimentation lorsque les bobinages principaux sont connectes en série, et comprenant en outre :
un circuit électrique destiné à être connecté à la source d'énergie alternative et aux enroulements principaux de chaque stator, las bobinages principaux, lorsqu'ils sont excités par un courant alternatif, produisant un champ magnétique tournant dans chaque stator, qui réagit avec la couche du matériau magnétique aimantable du rotor associé pour provoquer la rotation du rotor, le circuit électrique ayant un dispositif de connexion de chacun des bobinages principaux vers un premier stator en série avec les bobinages principaux correspondants de l'autre stator, et un dispositif de commutation destiné à connecter ces bobinages pour donner une connexion en triangle entre les bobinages principaux des deux stators qui sont alors en série, si bien qu'un courant d'intensité élevée est produit dans les bobinages principaux et produit alors un couple puissant sur le rotor avec une accélération relativement étanche de celui-ci.

30. Machine dynamoélectrique (10) à applications multiples selon la revendication 29, comprenant en outre un dispositif placé dans le circuit électrique et destiné à fonctionner, lorsque la vitesse du rotor atteint une valeur prédéterminée, pour connecter les bobinages principaux connectés en série des deux stators avec une connexion en étoile et, lorsque le rotor atteint 85 à 90 % environ de sa vitesse synchrone, pour exciter les enroulements concentrés dans les deux stators avec un courant alternatif monophasé de même fréquence que celui qui est transmis aux bobinages principaux afin que la couche du matériau magnétique permanent réaimantable placée sur le rotor associé soit aimantée avec un motif de pôles magnétiques Nord et Sud qui réagit fortement avec le champ magnétique tournant des bobinages principaux pour assurer l'accélération du rotor à une vitesse synchrone.
